(19) **Europäisches Patentamt / European Patent Office / Office européen des brevets**

(11) **EP 3 866 137 A1**

(12) **EUROPEAN PATENT APPLICATION**

(43) Date of publication:
**18.08.2021 Bulletin 2021/33**

(51) Int Cl.:
**G08G 5/00** (2006.01)   **G08G 5/02** (2006.01)

(21) Application number: **20382099.8**

(22) Date of filing: **13.02.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Universidad de Castilla La Mancha**
**02071 Albacete (ES)**

(72) Inventors:
- **Casado González, Rafael**
 **02071 ALBACETE (ES)**
- **Bermúdez Marín, Aurelio**
 **02071 ALBACETE (ES)**
- **López-Lago López-Zuazo, Manuel**
 **02071 ALBACETE (ES)**
- **Serna Serrano, José**
 **02071 ALBACETE (ES)**

(74) Representative: **Isern Patentes y Marcas S.L.**
 **Avda. Diagonal, 463 Bis, 2°**
 **08036 Barcelona (ES)**

(54) **METHODS, DEVICES AND SYSTEMS FOR CALCULATING A REINTRODUCTION MANOEUVRE FOR REINTRODUCING AN AIRCRAFT IN A DESCENT PATH TO RUNWAY**

(57) The present invention relates to methods, devices and systems which allow calculating, transmitting and executing a reintroduction manoeuvre for reintroducing an aircraft which, as it moves following a descent path to runway in a series of aircrafts separated from one another following said path, must abort the landing in the final step of the approach to runway, wherein a fundamental aspect consists of determining the existence of a gap in the descent path in which it is possible to reintroduce the aircraft, and, once the presence of the gap for reintroducing the aircraft has been determined, another fundamental aspect consists of determining the change in position of the gap in the descent path to runway for determining a reintroduction manoeuvre which leads the aircraft that missed the landing to the future position of said gap.

**Fig. 7**

EP 3 866 137 A1

Description

## TECHNICAL FIELD OF THE INVENTION

The present invention relates to management methods and systems for managing the approaching to runway which end with an aircraft landing on said runway. It particularly relates to implemented management methods and systems which must be executed so that an aircraft can be reintroduced and finish the approaching to runway manoeuvre after the occurrence of a missed approach manoeuvre or a missed landing.

## STATE OF THE ART

An aircraft flight process has different phases which could very generally be summarised as takeoff, route transit and landing. A series of protocols or instructions established in aeronautical charts and supervised by air traffic controllers, ATC, must be executed when moving between the different flight phases.

In particular, the landing phase is considered to be probably the most complicated because it requires carrying out all of the preparation needed for landing procedures, requiring greater attention to details, higher concentration and expertise.

Upon moving closer to the destination and landing, aircraft pilots must work closely with the ATC while they make critical decisions based on all the carefully monitored aircraft parameters, where each second of delay, misunderstandings between crew members or any other negative factor may result in a catastrophe. Said tasks can be even more complicated in adverse weather conditions.

Once a landing sequence, in which are contemplated all the stages or steps leading the aircraft to the runway, has been determined, the aircraft must follow an approach sequence comprising a descent route or path that concludes with landing on the runway. It is important to note that, in the approaching to runway sequence, the pilot must have visual control of the runway, verifying that it is free of obstacles. In the event of the presence of obstacles which complicate or impede landing or the presence of adverse weather conditions, the pilot can and must abort the landing, which causes what is referred to as a "missed approach manoeuvre".

Generally, after the occurrence of a missed approach manoeuvre, and as is required to be established in the specific aeronautical chart, the aircraft is directed to a safe space where it waits for an indefinite time for new instructions from the ATC to set out again on the path provided in the initial approach manoeuvre it aborted.

As found in some studies, missed approach manoeuvres prolong flight time, has a negative effect on passenger satisfaction, increases fuel consumption and, accordingly, increases the overall aeronautical service cost. Furthermore, they contribute to congesting airspace and intensifying the environmental footprint represented by air traffic in terms of atmospheric and noise pollution.

Therefore, in the event of a missed approach manoeuvre, if the aircraft is kept for more time than that necessary searching for the suitable time to be reintroduced in the descent path, the negative effects generated by said missed approach will be considerably increased, such that it would be ideal to immediately reintroduce the aircraft in the descent to runway path it just abandoned. However, given that precautions must be stepped up to guarantee flight safety and the air traffic must be taken into account, the ATC does not usually allow immediate reintroduction, but rather prefers to reintroduce the aircraft from the safe space in which it is found after the missed approach manoeuvre.

The new Performance-Based Navigation (PBN) systems today offer guarantees regarding precision, trustworthiness and continuity of service that are sufficient for proposing alternative missed approach procedures focused on reintroducing aircrafts in air traffic, rather than taking them out of same towards the safe space; however, these methods are neither automated nor optimised for reintroducing the aircraft in the path of the approach manoeuvre.

Therefore, there is a need to provide methods, devices and/or systems which, in an optimum, precise and safe manner, allow reintroducing an aircraft in the path of an approach to runway manoeuvre after a missed approach manoeuvre, which prevents having to direct the aircraft to the safety zone, as established in aeronautical charts.

## DESCRIPTION

To respond to the need that has been found, the present invention is aimed at providing methods, devices and systems which allow calculating, transmitting and executing a reintroduction manoeuvre for reintroducing an aircraft which, as it moves following a descent path to runway in a series of aircrafts separated from one another following said path, must abort the landing in the final step of the approaching to runway.

As mentioned in the preceding section, a conventional missed approach manoeuvre, in which the aircraft that aborts landing is taken to a safe space while awaiting instructions from the air traffic controller to resume the descent path to runway, increases the general navigation costs, as well as the discomfort of users and congestion of the airspace, therefore when is inevitable to having a miss or abort landing, it would be optimal to be able to reintroduce the aircraft as quickly as possible in the descent path so that it may land on the runway without major delays.

Therefore, to be able to reintroduce the aircraft as soon as possible, there should be a locatable gap between aircrafts in the series of aircrafts, such that said gap is sufficient for safely reintroducing the aircraft in the path. In this sense, a fundamental aspect of the present invention consists of determining the existence of a gap in the descent path in which it is possible to reintroduce the aircraft.

The person skilled in the art will understand that the expression "gap" is a definition for the distance or physical space existing between two consecutive aircrafts of the series of aircrafts necessary for the aircraft to be safely reintroduced in the descent path along which it was moving when the missed landing occurred.

With regard to the path, it is important to note that the general flight path of an aircraft is described in aeronautical charts and they are specifically defined by a series of waypoints, which are point coordinates in the airspace which, when connected by straight segments, forms a route to be followed by the aircraft.

In the proximity of an airport, aircrafts from different destinations converge, and, therefore, these aircrafts must follow a descent route or path leading them to the runway in an orderly manner. Aeronautical charts also contemplate the waypoints which define said descent path and are transmitted to aircrafts by the ATC (Air Traffic Controller). Likewise, the ATC decides the order in which the aircrafts set out on the path to the runway through the descent path and can incorporate or eliminate waypoints to slightly modify the descent path to runway.

In all the stages of flight, and particularly in the approach to runway and landing phases, the aircrafts must be in continuous communication with the ATC, said communication being two-way, transmitting their state (position, speed, etc.) and receiving instructions from the ATC which may be aimed at controlling the distance with the aircraft in front of it and/or behind it.

In the same manner, when the ATC directs aircrafts towards the descent path, it must establish a minimum separation distance between each of the series of aircrafts such that each aircraft can land safely. This separation distance between aircrafts can be increased such that there is a gap between two aircrafts in which an aircraft may be introduced if needed.

As mentioned, locating this gap is one of the fundamental aspects of the present invention. For purposes of the invention, knowing how the gap is generated is irrelevant; all that matters is the fact that the gap must be located, if there is one. The technique used for locating the gap will be described in detail in later sections.

Given that the series of aircrafts move at a speed established by the descent path to runway, once the gap is located, it is not stationary, but rather it moves as the aircrafts between which it is located are moving along the path. In this manner, once the presence of the gap for reintroducing the aircraft has been determined, another fundamental aspect of the invention consists of determining the change in position of the gap in the descent path to runway for determining a reintroduction manoeuvre which leads the aircraft to the future position of said gap.

If the determined gap is simulated as a phantom aircraft, due to the physical space it occupies in the path, travelling along the descent to runway path defined by the waypoints, after the passage of a certain time, this phantom aircraft will have changed its position and will be located in a future position, such that in a virtually simultaneous manner, at the moment in which the aircraft misses the landing and departs from the descent to runway path, a reintroduction manoeuvre in which there is determined a reintroduction path, the conclusion of which coincides with the future position in which the phantom aircraft will be located, is calculated.

It is important to note that determining the change in position of the gap, i.e., its future position in the descent path after the passage of a certain time, requires analysing the course of the phantom aircraft on the descent path, with all that this involves, which includes simulating or modelling the path it must follow through the sequence of established waypoints. Although there are various methods for simulating or describing paths, in particular a path with straight and curved segments such as those the aircrafts may follow in the descent path, in the present invention, the technique used for simulating the descent path followed by the aircrafts, including the phantom aircraft simulating the gap, is the Dubins path, which is described in depth in the following sections.

In addition to the foregoing, once the future position of the gap has been determined, it is necessary to generate a reintroduction manoeuvre which includes a reintroduction path to be followed by the aircraft, which also requires the technique that is suitable for said aircraft, when reintroduced, to coincide with the future position of the gap. Therefore, generating the reintroduction manoeuvre is another fundamental aspect of the invention and will be described in detail in later sections.

The invention is disclosed as a computer-implemented method for calculating a reintroduction manoeuvre for reintroducing an aircraft in a descent path to runway following a series of aircrafts with a minimum time interval of separation between said aircrafts, as well as a device configured for the same purpose. Different control systems for the approach to runway of aircrafts are also disclosed taking into account different frames of reference, according to where the method and/or the device is implemented.

The main advantage of the present invention is that it minimises all the negative effects as regards economic effects, air traffic management, environmental footprint and passenger satisfaction, which are generated when an aircraft close to landing must execute a conventional missed approach manoeuvre.

Another advantage is the optimisation and automation, at least partially, of an aeronautical process in which the ATC makes decisions in which it has to determine the suitable moment for reintroducing an aircraft that has executed a missed approach procedure.

**BRIEF DESCRIPTION OF THE FIGURES**

The foregoing and other advantages and features will be more fully understood from the following detailed description of embodiments in reference to the attached drawings to be considered in an illustrative and non-limiting manner, in which:

- Figure 1 is a view of a 3D representation of the airspace to be used in the different embodiments of the invention.
- Figure 2 shows the parameters which intervene in obtaining the direction of turn in a manoeuvre when the aircraft has been provided with a waypoint towards which it must be directed.
- Figure 3 shows the parameters which intervene in the calculation of the point of transit between waypoints defining the descent path.
- Figure 4 shows the parameters which intervene in the calculation of an LSL path according to Dubins paths.
- Figure 5 shows the parameters which intervene in the calculation of an LSR path according to Dubins paths.
- Figure 6 shows the parameters which intervene in the algorithm for estimating the time to destination of an aircraft following the descent to runway path established by the series of waypoints.
- Figure 7 shows a portion of an approach manoeuvre in which the descent path is defined by a series of waypoints, where at a given time the pilot of the aircraft **a** chooses to miss the landing and is reintroduced in the same descent path according to the implementations of the present invention.
- Figure 8 shows a fragment of an approach sequence with a descent path to runway defined by a series of waypoints in which the calculation of the future position of an aircraft in said descent path to runway after a certain time is exemplified.
- Figure 9 shows the final portion of an approach manoeuvre in which a path descent to runway through a series of waypoints is defined and in which the parameters which intervene in the calculation of the gap in the descent path for reintroducing the craft that missed the landing are shown.
- Figure 10 shows the location of the auxiliary waypoints of the reintroduction path for the scenario of Figure 7.
- Figure 11 shows the parameters which intervene in the calculation of the auxiliary waypoints established for the reintroduction path.

**DETAILED DESCRIPTION OF AN EMBODIMENT**

A number of specific details in the form of examples are disclosed in the following detailed description to provide thorough understanding of the relevant teachings. However, it will be evident for those persons skilled in the art that the present teachings can be carried out to practice without such details.

As mentioned in the preceding sections, the present invention focuses on methods and devices which allow calculating a reintroduction manoeuvre for reintroducing an aircraft in a descent to runway path following a series of aircrafts with a minimum time interval of separation between said aircrafts, as well as the systems associated with said methods and/or devices.

Given the complexity of the invention, fundamental aspects which simultaneously converge to give rise to the invention must be defined.

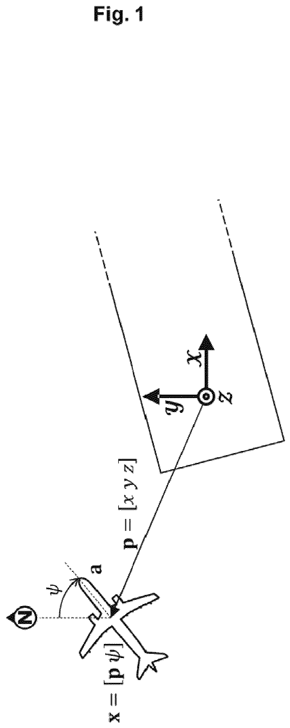

First, and given that aircrafts move in an airspace, the airspace to be transited by the aircrafts must be modelled, for which purpose it is assumed that the surface of the Earth is flat, such that, as observed in Figure 1, the airspace is defined by three vectors *x, y, z,* pointing to the east, to the north and upwards, respectively. On the plane, the origin of coordinates is located at the point of contact of the aircrafts with the runway for landing; in the vertical axis, the origin is located at sea level.

A three-dimensional position is defined as a vector $\mathbf{p} = [x\ y\ z] \in \mathbb{P}^{3D}$ with respect to the origin of coordinates. For the sake of simplicity, when the height is irrelevant, it is possible to work on the plane by redefining $\mathbf{p} = [x\ y] \in \mathbb{P}^{2D}$. An orientation $\psi$ on the plane is defined as the angle from the north to said orientation, with positive value in the clockwise direction; therefore, it will be considered that the course of an aircraft **a** is determined by the orientation $\psi$ of its longitudinal axis. In summary, the position of an aircraft **a** at a given time can be expressed by means of the state vector $\mathbf{x} = [\mathbf{p}\ \psi] \in X$. The inclination of the aircraft **a** on its respective axes (angles typically referred to as roll, pitch and yaw) is not relevant for describing the invention beyond the fact that the yaw angle may coincides

with the orientation $\psi$.

Having said that, given that aircrafts move through the airspace, a dynamic model of said aircrafts must be defined. As observed in Figure 1, $\mathbf{x} = [x\ y\ z\ \psi]$ is defined as the state vector in which an aircraft $\mathbf{a}$ immersed in an approach manoeuvre can be found. Vector $\mathbf{u} = [F_S\ V_S\ Y_S] \in$ U is the input into the system modelling the movement of the aircraft. Parameters $F_S$ and $V_S$ respectively establish the horizontal and vertical forward movement speeds desired for the aircraft $\mathbf{a}$. In turn, $Y_S$ represents the angular speed of the change in course. The system dynamics are defined in the manner that $\dot{\mathbf{x}} = \mathbf{f}(\mathbf{x}, \mathbf{u})$ as follows:

$$\begin{cases} \dot{x} = F_s \sin \psi \\ \dot{y} = F_s \cos \psi \\ \dot{z} = V_s \\ \dot{\psi} = Y_s \end{cases} \qquad (1)$$

As stated in previous sections, the paths followed by the aircrafts are defined by a series of waypoints which are point coordinates in the airspace which, when connected by straight segments, forming a route to be followed by the aircraft $\mathbf{a}$.

Therefore, a waypoint is defined as a vector $\mathbf{w} = [\mathbf{p}\ s] \in$ W, where $\mathbf{p} \in \mathbb{P}^{3D}$ establishes a three-dimensional position, and $s \in$ S determines the horizontal speed at which the aircraft must be directed towards same. The behaviour of an automatic pilot for the aircraft $\mathbf{a}$ can thereby be modelled as a function pilot:X x W $\rightarrow$ U which will be executed repeatedly.

***Table 1. Automatic pilot Algorithm***

| | $\mathbf{u} = \text{pilot}(\mathbf{x},\mathbf{w})$ |
|---|---|
| 01 | $[x_x\ y_x\ z_x\ \psi] = \mathbf{x}$ |
| 02 | $[x_w\ y_w\ z_w\ s] = \mathbf{w}$ |
| 03 | $F_s = s$ |
| 04 | $\overline{\mathbf{xw}} = [x_w - x_x,\ y_w - y_x]$ |
| 05 | $d_{xy} = |\overline{\mathbf{xw}}|$ |
| 06 | $d_z = z_w - z_x$ |
| 07 | $V_s = \dfrac{d_z}{d_{xy}} F_s$ |
| 08 | $\mathbf{h} = [\sin \psi,\ \cos \psi]$ |
| 09 | $Y_s = \text{sgn}(\overline{\mathbf{xw}} \cdot \mathbf{h})\ \dfrac{F_s}{r}$ |
| 10 | $\mathbf{u} = [F_s\ V_s\ Y_s]$ |

Table 1 above shows the algorithm for an automatic aircraft pilot model implemented in the invention. By following the lines of the algorithm, it can be seen that from the state of the aircraft (01) and the current waypoint (02), the pilot must recalculate the vector $\mathbf{u}$ (10) so that the aircraft can navigate to said target.

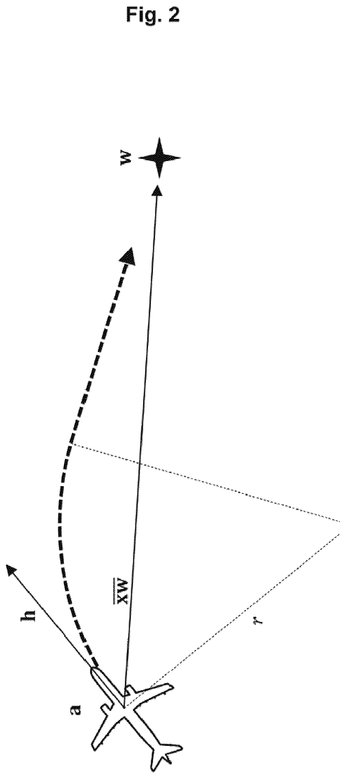

The assignment of the horizontal speed can be done directly (03). For assigning the vertical speed, it can be assumed that the aircraft is oriented towards the waypoint. If this is not the case, this parameter will be progressively corrected as the aircraft turns. A vector is defined in the horizontal plane from the aircraft to the waypoint (04). The horizontal distance to the waypoint coincides with the modulus of said vector (05). Moreover, the vertical distance from the aircraft to the waypoint coincides with the difference in height of both (06). The vertical speed (07) is obtained considering both distances. Lastly, the pilot calculates the turning speed. The course vector of the airplane $\mathbf{h}$ (08) is previously defined. Figure 2 shows how the relative position of vectors $\overline{\mathbf{xw}}$ and $\mathbf{h}$ allows determining whether the turn is to the left or to the right. The sign of the scalar product of both vectors coincides with the sign of the angular speed to be applied, and by taking into account the turning radius r, the angular turning speed (09) is obtained.

Given that the dynamics of the aircraft in the airspace have already been defined and an automatic pilot algorithm that enables the aircraft to fly to a specific point has been established, it is necessary to define the manner in which the aircrafts travel along the descent to runway path.

As mentioned in previous sections, the air traffic controller (ATC) carries out the task of administering the general approach to runway procedure in which the descent path to runway is defined as sequences or series of waypoints through which the aircrafts must travel; wherein the ATC modifies said series of waypoints by incorporating and/or eliminating elements when needed.

The descent path to runway is thereby defined as an ordered list or sequence of waypoints

$$M \in \mathcal{P}(\mathbb{W}).$$

To that end, there are defined the function firstW:

$$\mathcal{P}(\mathbb{W}) \to \mathbb{W} \cup \emptyset,$$

providing the first waypoint in the sequence (or nothing, indicating that the sequence is empty), and the function nextW:

$$\mathcal{P}(\mathbb{W}) \times \mathbb{W} \to \mathbb{W} \cup \emptyset$$

which, given a certain waypoint, provides the next one in the series, or nothing, indicating that said waypoint was the last one, and therefore the aircraft has landed. A complete approach procedure as a set of alternative descent paths finishing in the same runway for landing is defined. Said method can be structured conceptually as a tree by using the previous definitions of $\mathbb{W}$, firstW y next.

There is also defined the function prevW:

$$\mathbb{A} \to \mathbb{W} \cup \emptyset$$

which, given a certain aircraft, provides the waypoint said aircraft used prior to the current one in the sequence, or nothing, indicating that said waypoint is the first, and therefore the aircraft has just been detected in the airspace. It holds that nextW(prevW([**x w**])) = **w.**

The next task executed by the ATC is the control of the aircraft traffic from the established descent path to runway, and it consists of indicating to each pilot the waypoint to be used as a reference, updating this information as the aircraft moves forward along the path, from the time it enters the airspace until it lands on the runway.

The existence of an effective two-way communication system between the different aircrafts moving along the descent path and the ATC is therefore assumed. By means of this system, the aircrafts periodically transmit their location **x** $\in$ X to the ATC, for example, once per second. From the obtained data, the ATC manages the series of aircrafts $\mathbb{A} = \{\mathbf{a}_1, \mathbf{a}_2 \dots \mathbf{a}_n\}$, where each element $\mathbf{a} = [\mathbf{x}\ \mathbf{w}] \in \mathbb{A}$ is the state vector in which an aircraft immersed in an approach manoeuvre through the descent path can be found. The first value determines the current position and course, whereas the second value indicates the waypoint towards which it is directed at this time.

In turn, the ATC transmits to each aircraft the current target waypoint, assuming the responsibility of determining the time of transit from one waypoint to the next, taking into account the fact that the pilot will change course as soon as he receives a new indication. This criterion provides maximum flexibility when making coordinated decisions (involving multiple aircrafts) in the event of unexpected situations such as, for example, a missed approach manoeuvre.

However, in other implementations, the choice could be made to supply a chain sequence of waypoints to the pilot, leaving it up to the pilot to decide when to travel between them.

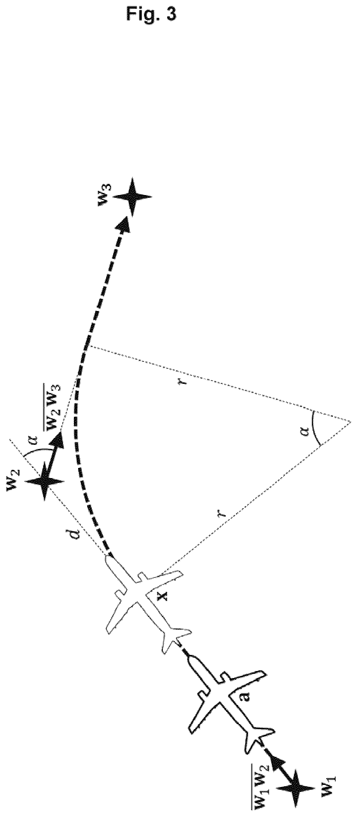

Figure 3 illustrates the method for calculating the point of transit between the waypoints defining the descent path. A series of waypoints $M = \{\mathbf{w}_1, \mathbf{w}_2, \mathbf{w}_3\}$ supplied by the ATC is assumed; therefore, it holds that prevW(**a**) = $\mathbf{w}_1$, **a** = [~ $\mathbf{w}_2$] and nextW($M$, $\mathbf{w}_2$) = $\mathbf{w}_3$. Taking into account the behaviour of the pilot described above in Table 1, the aircraft must travel from $\mathbf{w}_2$ to $\mathbf{w}_3$ when it is in position **x** at a distance $d$ from $\mathbf{w}_2$ which allows aiming for $\mathbf{w}_3$ by taking a single curved path of pre-set radius r.

The anticipated turn function $\mathrm{turn}{:}\, \mathbb{A} \to \mathbb{X}$ which, given a certain aircraft, will return the position in which it must travel to the next waypoint, i.e., turn(**a**) = **x** is thus defined. The table shows the turn anticipation calculation algorithm. First, the 3 waypoints involved belonging to the series of waypoints $M$ (01-03) are denoted. According to this algorithm, the calculations are performed on the 2D plane, so the information corresponding to the waypoints (04) is previously adapted. The angle $\alpha$ formed between the three waypoints involved is subsequently calculated by applying the definition of the vector scalar product in (05-07). Given that the angle between the vectors coincides with the turning angle, the distance can be calculated by means of expression (08). From that distance, the position (09) and orientation (10) in which the aircraft must manoeuvre can be calculated.

*Tabla 2. Turn anticipation algorithm*

| | **x = turn(a)** |
|---|---|
| 01 | $\mathbf{w}_1$ = prevW($\mathbf{a}$) |
| 02 | [$\sim \mathbf{w}_2$] = a |
| 03 | $\mathbf{w}_3$ = nextW(M, $\mathbf{w}_2$) |
| 04 | $[\mathbf{p}_1\,\mathbf{p}_2\,\mathbf{p}_3] = [\mathbf{w}_1\,\mathbf{w}_2\,\mathbf{w}_3]\begin{bmatrix} 1 & 0 \\ 0 & 1 \\ 0 & 0 \\ 0 & 0 \end{bmatrix}$ |
| 05 | $\overline{\mathbf{w}_1\mathbf{w}_2} = \dfrac{\mathbf{p}_2 - \mathbf{p}_1}{\lvert\mathbf{p}_2 - \mathbf{p}_1\rvert}$ |
| 06 | $\overline{\mathbf{w}_2\mathbf{w}_3} = \dfrac{\mathbf{p}_3 - \mathbf{p}_2}{\lvert\mathbf{p}_3 - \mathbf{p}_2\rvert}$ |
| 07 | $\alpha$ = acos($\overline{\mathbf{w}_1\mathbf{w}_2} \cdot \overline{\mathbf{w}_2\mathbf{w}_3}$) |
| 08 | $d = r\tan\dfrac{\alpha}{2}$ |
| 09 | $\mathbf{p} = \mathbf{p}_2 - \overline{\mathbf{w}_1\mathbf{w}_2}d$ |
| 10 | $\psi = \text{atan}\dfrac{\overline{\mathbf{w}_1\mathbf{w}_2}\begin{bmatrix}1\\0\end{bmatrix}}{\overline{\mathbf{w}_1\mathbf{w}_2}\begin{bmatrix}0\\1\end{bmatrix}}$ |
| 11 | $\mathbf{x}$ = [$\mathbf{p}\ \psi$] |

Given that in the model described up until now the aircraft travels from one waypoint to another following a straight path and then a curvilinear path of constant radius when it receives the next waypoint of the sequence to which it must be directed, the present invention uses the model of Dubins curves, which define a path on the 2D plane for reaching, from an initial position and orientation, a final position and orientation, assuming that, as stated, the aircraft moves in a straight line, or with curves of a pre-established constant radius.

In the event of a given configuration, the optimal path can be of six different types referred to as LSL (and RSR), LSR (and RSL) and LRL (and RLR), respectively. Each letter represents an optional segment of the manoeuvre: R Right, L Left, S Straight. The two first paths are described below, omitting the respective symmetrical versions. The third option is applied in situations in which the initial and final positions are very close (in relation to the turning radius) and is not applicable in the present invention.

The Dubins function is defined as $\mathcal{D}: \mathbb{X} \times \mathbb{X} \times \mathbb{S} \to \mathbb{X} \times \mathbb{X} \times \mathbb{T}.$ Assuming the turning radius $r$ to be pre-established, function call $[\mathbf{q}_1\,\mathbf{q}_2\,t] = \mathcal{D}(\mathbf{x}_1, \mathbf{x}_2, s),$ from an initial state $\mathbf{x}_1$ = [$x_1\,y_1\,\psi_1$] and a desired final state $\mathbf{x}_2$ = [$x_2\,y_2\,\psi_2$], will return the passing points $\mathbf{q}_1$ and $\mathbf{q}_2 \in \mathbb{X},$ as well as the time $t \in \mathbb{T}$ needed for executing the manoeuvre at the indicated speed $s \in \mathbb{S}.$ In the event that a path is unviable, it will produce as a result [Ø Ø ∞]. The function will return the fastest path from among all the viable alternatives, as shown in the algorithm of Table 3. On those occasions where the passing points are not relevant, the notation will be simplified to $\mathcal{D}: \mathbb{X} \times \mathbb{X} \times \mathbb{S} \to \mathbb{T},$ with the function call

being $t = \mathcal{D}(\mathbf{x}_1, \mathbf{x}_2, s)$.

**Table 3. Dubins curve calculation algorithm**

| | $[\mathbf{q}_1\ \mathbf{q}_2\ t] = \mathcal{D}(\mathbf{x}_1, \mathbf{x}_2, s)$ |
|---|---|
| 01 | $[\mathbf{q}_1\ \mathbf{q}_2\ t] = \mathcal{D}_{\mathrm{LSL}}(\mathbf{x}_1, \mathbf{x}_2, s)$ |
| 02 | $[\mathbf{q}'_1\ \mathbf{q}'_2\ t'] = \mathcal{D}_{\mathrm{LSR}}(\mathbf{x}_1, \mathbf{x}_2, s)$ |
| 03 | if $t' < t$ $[\mathbf{q}_1\ \mathbf{q}_2\ t] = [\mathbf{q}'_1\ \mathbf{q}'_2\ t']$ |
| 04 | $[\mathbf{q}'_1\ \mathbf{q}'_2\ t'] = \mathcal{D}_{\mathrm{RSL}}(\mathbf{x}_1, \mathbf{x}_2, s)$ |
| 05 | if $t' < t$ $[\mathbf{q}_1\ \mathbf{q}_2\ t] = [\mathbf{q}'_1\ \mathbf{q}'_2\ t']$ |
| 06 | $[\mathbf{q}'_1\ \mathbf{q}'_2\ t'] = \mathcal{D}_{\mathrm{RSR}}(\mathbf{x}_1, \mathbf{x}_2, s)$ |
| 07 | if $t' < t$ $[\mathbf{q}_1\ \mathbf{q}_2\ t] = [\mathbf{q}'_1\ \mathbf{q}'_2\ t']$ |

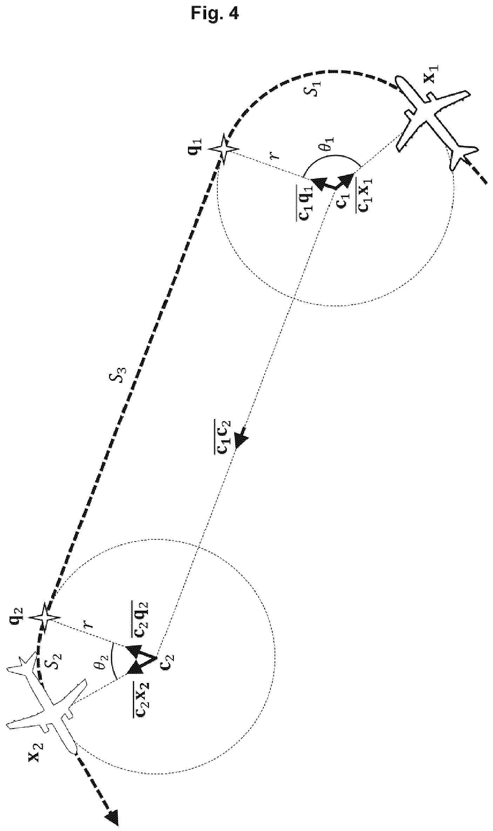

Figure 4 shows an aircraft travelling from an initial state $\mathbf{x}_1$ to a final state $\mathbf{x}_2$, using an LSL path. It first travels along curved segment $S_1$ turning to the left until reaching passing point $\mathbf{q}_1$, then it travels along segment $S_3$ in a straight line until reaching $\mathbf{q}_2$, and finally it travels along another curved segment $S_2$ turning to the left until reaching $\mathbf{x}_2$.

Table 4 shows the LSL path calculation algorithm. The unit vector perpendicular to the course (02) and the centre of the initial turning circumference (03) can be calculated from the aircraft position and orientation. Similarly, the unit vector (05) and the centre of the final turning circumference (06) can be calculated from the destination position and orientation. Once the centres of both circumferences are provided, the distance between them is obtained, said distance corresponding to the length of the rectilinear segment (07), and a unit vector between both (09) which is used to obtain the vectors relating the centres with the corresponding passing points (10) is obtained. Next, it is possible to calculate the intermediate passing points (11-12). The angle turned in the initial curved segment is subsequently calculated by applying the properties of the vector scalar product (13). Dubins paths often require angles greater than 180° (alternatives that will later be ruled out for a better option). Given that the properties of the scalar product always provide the smallest of the two possible angles, it is necessary to detect and correct said circumstance. To that end, the properties of the vector product (14) are applied where the vertical component of the result will indicate whether the angle is greater than 180°, in which case it will be corrected (15). The angle travelled in the second turn (16-18) is calculated in the same way. Next, the length of the curved segments and the total distance travelled (19-21) are calculated. In the particular case where $\mathbf{c}_1 = \mathbf{c}_2$, both circumferences coincide, resulting in $S_3 = 0$ and $\theta_1 = \theta_2 = \theta$. Given the uncertainty associated with the position of the aircraft in flight, this circumstance is controlled by entering a threshold in the condition verifying this fact (08). Then, it is assumed that there is no rectilinear segment and that the two curved segments are actually one. The passing points are assigned to the initial position (23) and final position (24) of the aircraft, respectively, and the angle between both orientations (25-27) and the total distance travelled (28) are obtained. Lastly, assuming constant speed $s$, the time it will take the manoeuvre to be completed (30) can be calculated.

**Table 4. LSL Dubins curve calculation algorithm**

| | |
|---|---|
| 01 | $[x_1\ y_1\ \psi_1] = \mathbf{x}_1$ |
| 02 | $\overline{\mathbf{c}_1\mathbf{x}_1} = \left[ \sin\left(\psi_1 + \frac{\pi}{2}\right), \cos\left(\psi_1 + \frac{\pi}{2}\right) \right]$ |
| 03 | $\mathbf{c}_1 = [x_1\ y_1 - \overline{\mathbf{c}_1\mathbf{x}_1}\ r$ |
| 04 | $[x_2\ y_2\ \psi_2] = \mathbf{x}_2$ |
| 05 | $\overline{\mathbf{c}_2\mathbf{x}_2} = \left[ \sin\left(\psi_2 + \frac{\pi}{2}\right), \cos\left(\psi_2 + \frac{\pi}{2}\right) \right]$ |
| 06 | $\mathbf{c}_2 = [x_2\ y_2] - \overline{\mathbf{c}_2\mathbf{x}_2}\ r$ |
| 07 | $S_3 = |\mathbf{c}_2 - \mathbf{c}_1|$ |

(continued)

| 08 | if $S_3 >$ *threshold* |
|---|---|
| 09 | $\overline{c_1c_2} = \dfrac{c_2 - c_1}{S_3}$ |
| 10 | $\overline{c_1q_1} = \overline{c_2q_2} = \overline{c_1c_2} \begin{bmatrix} 0 & 1 \\ -1 & 0 \end{bmatrix}$ |
| 11 | $q_1 = c_1 + \overline{c_1q_1}\, r$ |
| 12 | $q_2 = c_2 + \overline{c_2q_2}\, r$ |
| 13 | $\theta_1 = \text{acos}(\overline{c_1x_1} \cdot \overline{c_1q_1})$ |
| 14 | $[\sim \ \sim z_{n1} = [\overline{c_1x_1}\ 0] \times [\overline{c_1q_1}\ 0]$ |
| 15 | if $z_{n1} < 0\ \theta_1 = 2\pi - \theta_1$ |
| 16 | $\theta_2 = \text{acos}(\overline{c_2q_2} \cdot \overline{c_2x_2})$ |
| 17 | $[\sim \ \sim z_{n2}] = [\overline{c_2q_2}\ 0] \times [\overline{c_2x_2}\ 0]$ |
| 18 | if $z_{n2} < 0\ \theta_2 = 2\pi - \theta_2$ |
| 19 | $S_1 = \theta_1 r$ |
| 20 | $S_2 = \theta_2 r$ |
| 21 | $S_T = S_1 + S_2 + S_3$ |
| 22 | else |
| 23 | $q_1 = [x_1, y_1]$ |
| 24 | $q_2 = [x_2, y_2]$ |
| 25 | $\theta = \text{acos}(\overline{c_1x_1} \cdot \overline{c_2x_2})$ |
| 26 | $[\sim \ \sim z_{n1}] = [\overline{c_1x_1}\ 0] \times [\overline{c_2x_2}\ 0]$ |
| 27 | if $z_{n1} < 0\ \theta = 2\pi - \theta$ |
| 28 | $S_T = \theta r$ |
| 29 | endif |
| 30 | $t = \dfrac{S_T}{s}$ |

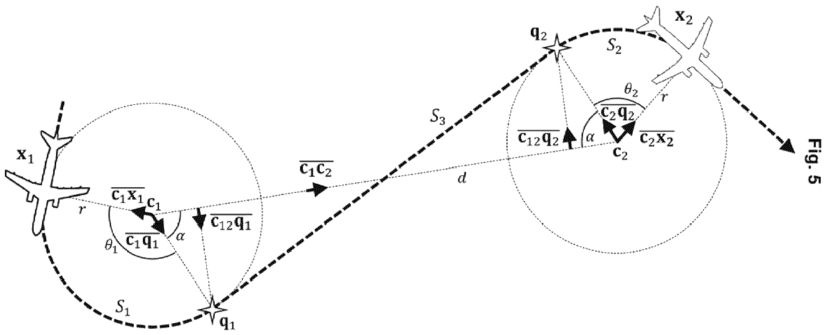

Similarly, Figure 5 shows an aircraft travelling from its initial state $x_1$ to a final state $x_2$ using an LSR path. It must first travel along a curved segment $S_1$ turning to the left until reaching the passing point $q_1$, then it travels along a segment $S_3$ in a straight line until reaching $q_2$ and, finally it travels along another curved segment $S_2$ turning to the right until reaching $x_2$.

Table 5 teaches the path computation algorithm. The unit vector perpendicular to the course (02) and the centre of the initial turning circumference (03) can be calculated from the position and orientation of the aircraft. Similarly, it is possible to calculate the unit vector (05) and the centre of the final turning circumference (06) from the destination position and orientation. Once the centres of both circumferences are provided, the distance between them (07), corresponding with the length of the rectilinear segment, is obtained. In the event of $d < 2r$ (08), the circumferences then intersect and, therefore, there is no LSR path between the specified origin and destination positions, obtaining $\mathcal{D}(x_1, x_2) = [\varnothing \ \varnothing \ \infty]$ (09). In another case, the length of the rectilinear segment can be calculated by applying the Pythagorean theorem (11). Next, a unit vector between the centres of both circumferences (12) which is used for obtaining vectors $\overline{c_{12}q_1}$ and $\overline{c_{12}q_2}$ (13-14) is calculated. Moreover, taking into account that $r = \dfrac{d}{2}\cos\alpha,$ said angle (15) can be obtained and used for obtaining vectors $\overline{c_1q_1}$ and $\overline{c_2q_2}$ (16-17). The rest of the algorithm is similar to the LSL Dubins curve and calculates the intermediate passing points (18-19), the angles turned (20-25), the curved segments (26-27), the total distance travelled (28), and the total time of the manoeuvre (29).

***Table 5. LSR Dubins curve calculation algorithm***

$[x_1 \; y_1 \; \psi_1] = \mathbf{x}_1$

$\overline{\mathbf{c}_1\mathbf{x}_1} = \left[ \sin\left(\psi_1 + \frac{\pi}{2}\right), \cos\left(\psi_1 + \frac{\pi}{2}\right) \right]$

$\mathbf{c}_1 = [x_1 \; y_1] - \overline{\mathbf{c}_1\mathbf{x}_1} \; r$

$[x_2 \; y_2 \; \psi_2] = \mathbf{x}_2$

$\overline{\mathbf{c}_2\mathbf{x}_2} = \left[ \sin\left(\psi_2 - \frac{\pi}{2}\right), \cos\left(\psi_2 - \frac{\pi}{2}\right) \right]$

$\mathbf{c}_2 = [x_2 \; y_2] - \overline{\mathbf{c}_2\mathbf{x}_2} \; r$

$d = |\mathbf{c}_2 - \mathbf{c}_1|$

if $d < 2r$

$\quad [\mathbf{q}_1 \; \mathbf{q}_2 \; t] = [\emptyset \; \emptyset \; \infty]$

else

$S_3 = \sqrt{d^2 - (2r)^2}$

$\mathbf{c}_{12} = \dfrac{\mathbf{c}_2 - \mathbf{c}_1}{d}$

$\overline{\mathbf{c}_{12}\mathbf{q}_1} = \overline{\mathbf{c}_1\mathbf{c}_2} \begin{bmatrix} 0 & -1 \\ 1 & 0 \end{bmatrix}$

$\overline{\mathbf{c}_{12}\mathbf{q}_2} = -\overline{\mathbf{c}_{12}\mathbf{q}_1}$

$\alpha = \mathrm{acos}\, \dfrac{2r}{d}$

$\overline{\mathbf{c}_1\mathbf{q}_1} = \overline{\mathbf{c}_1\mathbf{c}_2} \cos\alpha + \mathbf{c}_{12}q_1 \sin\alpha$

$\overline{\mathbf{c}_2\mathbf{q}_2} = -\overline{\mathbf{c}_1\mathbf{q}_1}$

$\mathbf{q}_1 = \mathbf{c}_1 + \overline{\mathbf{c}_1\mathbf{q}_1} \; r$

$\mathbf{q}_2 = \mathbf{c}_2 + \overline{\mathbf{c}_2\mathbf{q}_2} \; r$

$\theta_1 = \mathrm{acos}(\overline{\mathbf{c}_1\mathbf{x}_1} \cdot \overline{\mathbf{c}_1\mathbf{q}_1})$

$[\sim \; \sim \; z_{n1}] = [\overline{\mathbf{c}_1\mathbf{x}_1} \; 0] \times [\overline{\mathbf{c}_1\mathbf{q}_1} \; 0]$

if $z_{n1} < 0 \; \theta_1 = 2\pi - \theta_1$

$\theta_2 = \mathrm{acos}(\overline{\mathbf{c}_2\mathbf{q}_2} \cdot \overline{\mathbf{c}_1\mathbf{x}_2})$

$[\sim \; \sim \; z_{n2}] = [\overline{\mathbf{c}_2\mathbf{q}_2} \; 0] \times [\overline{\mathbf{c}_2\mathbf{x}_2} \; 0]$

if $z_{n2} < 0 \; \theta_2 = 2\pi - \theta_2$

$S_1 = \theta_1 r$

$S_2 = \theta_2 r$

$S_T = S_1 + S_2 + S_3$

$t = \dfrac{S_T}{s}$

endif

Up until now, functions or algorithms needed for suitably understanding the invention and which the person skilled in the art will consider as essential for being able to reproduce same have been defined.

In particular, the functions or algorithms of the Dubins paths are essential for the development of the invention because, as will be seen below, the simulated and/or analysed paths are based on modelling Dubins paths according to the algorithm of Tables 3, 4 and 5. It is important to note that the algorithm of said Dubins paths $[\mathbf{q}_1\ \mathbf{q}_2\ t] = \mathcal{D}(\mathbf{x}_1, \mathbf{x}_2, s)$ like that of Table 3, which in turn calls the algorithms of Tables 4 and/or 5, once executed, returns the values of three variables; however, the person skilled in the art will see that it is possible to rule out one or two of the values returned to take only the one of interest at that time. The same concept can be applied with the other algorithms or functions implemented in the invention.

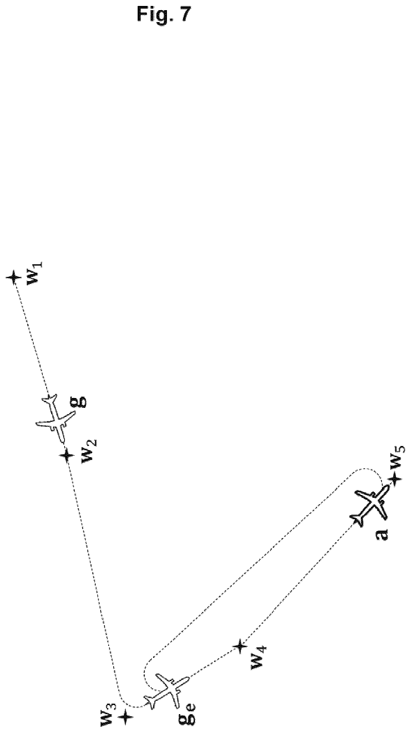

Moreover, as observed in Figure 7, the preferred embodiment of the invention discloses a computer-implemented method for calculating a reintroduction manoeuvre for reintroducing an aircraft **a** in a descent to runway path following a series of aircrafts with a minimum time interval of separation between said aircrafts.

As previously mentioned, in the event of a missed landing, the conventional missed approach manoeuvre establishes that the aircraft must be directed towards a safety zone and wait there for instructions from the ATC for a new approach procedure which allows the aircraft to either resume the aborted descent path or follow an alternative descent path.

The computer-implemented method of the invention intends to eliminate or substitute, by validating that there are safe conditions to that end, the conventional missed approach manoeuvre since it allows the aircraft, once it has missed the landing, to move through a suitable reintroduction path and almost immediately resume the descent path it just abandoned and conclude landing.

As stated above, aircrafts converge in the airspace close to the airport, and at that time the ATC indicates to them the approach manoeuvre, ordering the aircrafts in a set or series $\mathbb{A} = \{\mathbf{a}_1, \mathbf{a}_2 \dots \mathbf{a}_n\}$ and defining, among other parameters, the descent to runway path as a series of waypoints $\{\mathbf{w}_1, \mathbf{w}_2, \mathbf{w}_3 \dots \mathbf{w_n}\} \subset M$ which the aircrafts must follow in an orderly manner until landing.

Given that there has to be a minimum separation between each of the aircrafts which allows them to follow the descent path and land safely on the runway, i.e., the aircrafts must maintain a minimum following distance in order to be able to follow one another on the path and land safely, where this minimum distance can itself be considered a gap or free physical space in the descent path. However, this gap may not be large enough for inserting an aircraft **a** in it, such that a fundamental step of the method of the invention consists of determining the existence of a gap **g** in the descent path to runway for reintroducing the aircraft **a.**

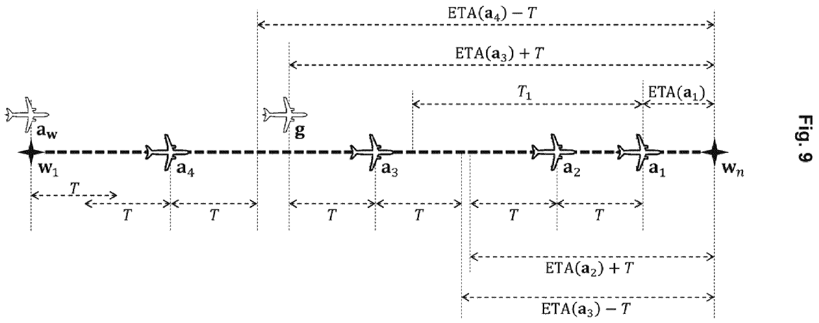

To be able to carry out this step, first the amount and the order of the aircrafts existing in the series of aircrafts must be determined; therefore, an order relation between the aircrafts immersed in the approach manoeuvre is established. There is defined the function $\mathrm{nextA}: \mathbb{A} \to \mathbb{A} \cup \emptyset$ which, given a certain aircraft, provides the next one in the sequence, or nothing, indicating that said aircraft is the last one of the series. This function verifies that $\mathrm{nextA}(\mathbf{a}_i) = \mathbf{a}_j$ if $\exists \mathbf{a}_j \in \mathbb{A} \mid \mathrm{ETA}(\mathbf{a}_i) < \mathrm{ETA}(\mathbf{a}_j)$ and $\nexists \mathbf{a}_k \in \mathbb{A} \mid \mathrm{ETA}(\mathbf{a}_i) < \mathrm{ETA}(\mathbf{a}_k) < \mathrm{ETA}(\mathbf{a}_j).$ Conversely, $\mathrm{nextA}(\mathbf{a}_i) = \varnothing$ if $\nexists \mathbf{a}_j \in \mathbb{A} \mid \mathrm{ETA}(\mathbf{a}_i) < \mathrm{ETA}(\mathbf{a}_j)..$ The aircrafts of Figure 9 verify that $\mathrm{nextA}(\mathbf{a}_i) = \mathbf{a}_{i+1}$, $1 \leq i < 4$.

Table 6 below describes the algorithm used for determining the gap $\mathbf{g} \in \mathbb{A}$ in the sequence of aircrafts. It is initially assumed that said gap **g** does not exist (01). For determining the scanning space, i.e., the boundaries within which the gap **g** will be located, a mock aircraft $\mathbf{a}_w$ is defined on the position of the first waypoint $\mathbf{w}_1$ of the series of waypoints and represents the end of the scanning space. To that end, the three-dimensional position of waypoint $\mathbf{w}_1$ (02) and the next waypoint (03) is obtained. The position thereof in the plane (04) is extracted from both waypoints for determining a vector between both (05) which will be the course (06) of the mock aircraft $\mathbf{a}_w$ (07).

At this point, a pair of consecutive aircrafts of the series must be assigned as leader aircraft $\mathbf{a}_L$ and follower aircraft $\mathbf{a}_F$ so as to evaluate if there is a sufficient gap **g** between such aircrafts for reintroducing the aircraft **a**. Therefore, and as shown in Table 6, the scanning begins from the aircraft **a** to be reintroduced (08), precisely in the instant before missing the landing and departing from the descent path to runway, to the mock aircraft $\mathbf{a}_w$ demarcating the end of the scanning begins. A time $\mathbf{t}_L$ for reinserting the aircraft **a** behind the lead aircraft $\mathbf{a}_L$ is calculated. The following aircraft $\mathbf{a}_F$ (11) is determined, and a time $\mathbf{t}_F$ for reinserting the aircraft **a** ahead of $\mathbf{a}_F$ (12) is calculated. At this point, the algorithm calls a time calculation function t = ETA(**a**), which is applied for calculating each $\mathbf{t}_L$ and $\mathbf{t}_F$. This time calculation algorithm will be explained below. At this point, a minimum time $T_1$ needed for guaranteeing that the aircraft **a** is not reintroduced behind itself and, as expressed above, a minimum separation time between aircrafts T needed for the aircrafts to maintain a minimum following distance and land safely on the runway, are entered.

A reinsertion time $\mathbf{t}_R$ has been determined when it is verified that times $\mathbf{t}_L$ and $\mathbf{t}_F$ are compatible (13), i.e., when $\mathbf{t}_F$ is greater than $\mathbf{t}_L$ and, therefore, the presence of the closest possible gap g of the following aircraft $\mathbf{a}_F$ (14) in the descent to runway path has been determined, and the algorithm concludes (15). Otherwise, the following pair of aircrafts (17) is evaluated in an iterative process (09-18). When the scanning ends, the information relating to the mock aircraft $\mathbf{a}_w$ that represented waypoint $\mathbf{w}_1$ (19) is eliminated.

*Table 6. Available gap determination algorithm*

| | $\mathbf{g} = \text{gap}(\mathbf{a}_1, T_1, T, \mathbf{w}_1)$ |
|---|---|
| 01 | $\mathbf{g} = \varnothing$ |
| 02 | $[\mathbf{p} \sim] = \mathbf{w}_1$ |
| 03 | $\mathbf{w}_2 = \text{nextW}(M, \mathbf{w}_1)$ |
| 04 | $[\mathbf{p}_1\ \mathbf{p}_2] = [\mathbf{w}_1\ \mathbf{w}_2] \begin{bmatrix} 1 & 0 \\ 0 & 1 \\ 0 & 0 \\ 0 & 0 \end{bmatrix}$ |
| 05 | $[x, y] = \mathbf{p}_2 - \mathbf{p}_1$ |
| 06 | $\psi = \text{atan}\dfrac{x}{y}$ |
| 07 | $\mathbf{a}_W = [\mathbf{p}\ \psi\ \mathbf{w}_2]$ |
| 08 | $\mathbf{a}_L = \mathbf{a}_1$ |
| 09 | while $\mathbf{a}_L = \mathbf{a}_W$ |
| 10 | $t_L = \max\{\text{ETA}(\mathbf{a}_L) + T, \text{ETA}(\mathbf{a}_1) + T_1\}$ |
| 11 | $\mathbf{a}_F = \text{nextA}(\mathbf{a}_L)$ |
| 12 | $t_F = \text{ETA}(\mathbf{a}_F) - T$ |
| 13 | if $t_F > t_L$ |
| 14 | $\mathbf{g} = \text{EFP}(\mathbf{a}_F, T + t_F - t_L)$ |
| 15 | break |
| 16 | endif |
| 17 | $\mathbf{a}_L = \mathbf{a}_F$ |
| 18 | endwhile |
| 19 | $\mathbf{a}_w = \varnothing$ |

Figure 9 shows the final portion of an approach manoeuvre in which a descent to runway path through a series of waypoints $\{\mathbf{w}_1 \dots \mathbf{w}_n\} \subset M$ is defined, such that it is verified that $\text{nextW}(M, \mathbf{w}_i) = \mathbf{w}_{i+1}, 1 \leq i < n$ y $\text{nextW}(M, \mathbf{w}_n) = \varnothing$.

Aircrafts $\{\mathbf{a}_1\ \mathbf{a}_2\ \mathbf{a}_3\ \mathbf{a}_4\} \in \mathbb{A}$ that verify that $\text{nextA}(\mathbf{a}_i) = \mathbf{a}_{i+1}$, $1 \leq i < 4$ are also provided. At a given time, aircraft $\mathbf{a}_1$ decides to abort the landing. In order to reinsert it in the descent path to runway, the location of a gap $g \in A$ is to be found before a minimum time $T_1$ before aircraft $\mathbf{a}_1$ (established as the initial scanning boundary), and ahead (in the figure from left to right) of waypoint $\mathbf{w}_1$ (established as the final scanning boundary, wherein the aircraft $\mathbf{a}_w$ is simulated).

Furthermore, all the aircrafts maintain at least a minimum separation time $T \in \mathbb{T}$ between one another, and the resulting gap (if there is one) should not be an exception.

When the algorithm of Table 6 is applied to the situation of Figure 9, the presence of a sufficient gap between aircrafts $\mathbf{a}_2$ and $\mathbf{a}_3$ is detected. Nevertheless, said gap is not farther away from $\mathbf{a}_1$ than what is established by restriction $T_1$; therefore, the method continues. Finally, the scanning detects that the sufficient gap $\mathbf{g} \in \mathbb{A}$ is located between aircrafts $\mathbf{a}_3$ and $\mathbf{a}_4$, fulfilling said restriction, and this step is concluded.

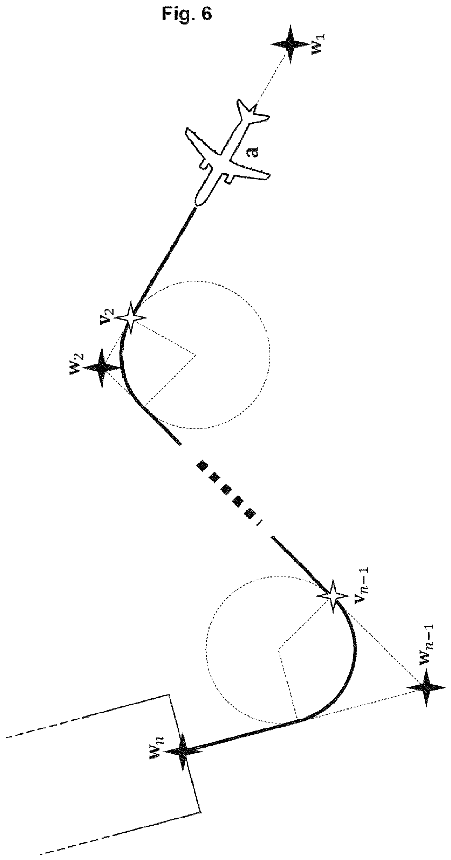

With respect to the calculation of the time $\mathbf{t}_L$ for reinserting the aircraft $\mathbf{a}$ behind the leader aircraft $\mathbf{a}_L$ and the calculation of the time $\mathbf{t}_F$ for reinserting the aircraft $\mathbf{a}$ ahead of $\mathbf{a}_F$, as stated, the algorithm of Table 6 calls the time calculation algorithm $t = \text{ETA}(\mathbf{a})$, which is an algorithm implemented for calculating the time to destination of any of the aircrafts of the series by following the current descent path to runway to the destination. Figure 6 presents a fragment of an approach sequence in which the approach path to runway is defined by a series of waypoints $\mathbf{w}_1$, $\mathbf{w}_2$, ... $\mathbf{w}_{n-1}$, $\mathbf{w}_n\}$ $\subset M$, such that it is verified that nextW($M$, $\mathbf{w}_i$) = $\mathbf{w}_{i+1}$, $1 \leq i < n$ and nextW($M$, $\mathbf{w}_n$) = Ø; and an aircraft $\mathbf{a} = [\mathbf{x}\ \mathbf{w}_2] \in \mathbb{A}$. Therefore, for calculating the time to the final waypoint $\mathbf{w}_n$ of the series, the time function must travel along the entire path passing through all the waypoints, with the corresponding changes in course or turns defined by the waypoints of the series.

For carrying out the foregoing, it is possible to apply the Dubins function, as explained for Table 3, for calculating the time it will take said aircraft $\mathbf{a}$ to land (ETA). The function $\mathrm{ETA}\colon \mathbb{A} \to \mathbb{T}$, described in Table 7 is thus defined as an iterative method which determines the passing points and accumulates the times. First, the current state of the aircraft $\mathbf{a}$ (01) is established, and the accumulated time (02) is set. Next, the turning point of the current waypoint $\mathbf{v}_i$ (05) is obtained, calling the algorithm $\mathbf{x}$ = turn($\mathbf{a}$) of Table 2 explained above and making the relevant adjustments, calculating the time it would take the aircraft $\mathbf{a}$ to reach it following the descent to runway path defined by the series of waypoints, using the Dubins function of Table 3, and it is added to the accumulated time variable (06). The current position is reassigned to the position of the turning point and is passed to the next waypoint of the series (07). The method is repeated until travelling through all the waypoints of the series (03-08), where in each iteration the time is accumulated in the time variable t, obtaining in the end the total time to destination to be used by the aircraft.

*Table 7. Time to destination estimation algorithm*

|  | $t$ = ETA($\mathbf{a}$) |
| --- | --- |
| 01 | [$\mathbf{x}\ \mathbf{w}$] = $\mathbf{a}$ |
| 02 | $t$ = 0 |
| 03 | while $\mathbf{w} \neq$ Ø |
| 04 | [~ $s$] = $\mathbf{w}$ |
| 05 | $\mathbf{v}$ = turn([$\mathbf{x}\ \mathbf{w}$]) |
| 06 | $t = t + \mathcal{D}(\mathbf{x}, \mathbf{v}, s)$ |
| 07 | [$\mathbf{x}\ \mathbf{w}$] = [$\mathbf{v}$ nextW($M$, $\mathbf{w}$)] |
| 08 | endwhile |

In the invention, in the case of the step of determining the existence of a gap $\mathbf{g}$ in the descent to runway path for reintroducing the aircraft $\mathbf{a}$, as indicated in Table 6 of the algorithm in question, the leader aircraft $\mathbf{a}_L \in A$ and the follower aircraft $\mathbf{a}_F \in A$ have been established, where in each iteration the maximum calculated time to destination for $t_L$ is obtained in lines (10) to (12), taking into account the minimum reinsertion time $T_1$ and the minimum separation time T using the algorithm $t$ = ETA($a$) for each of $\mathbf{a}_L \in \mathbb{A}\ y\ \mathbf{a}_F \in \mathbb{A}$, until the calculated time is suitable for reintroducing the aircraft $\mathbf{a}$.

It is also possible to calculate the time (TBA) separating the two aircrafts $\mathbf{a}_L \in \mathbb{A}\ y\ \mathbf{a}_F \in \mathbb{A}$ from the algorithm or function of Table 7 above. To carry this out, the function $\mathrm{TBA}\colon \mathbb{A} \times \mathbb{A} \to \mathbb{T}$, which verifies TBA($\mathbf{a}_L$, $\mathbf{a}_F$) = ETA($\mathbf{a}_F$) - ETA($\mathbf{a}_L$), is defined. In preferred embodiments TBA($\mathbf{a}_L$, $\mathbf{a}_F$) > 2T to guarantee the presence of the gap $\mathbf{g}$ in the descent path to runway.

Once the gap $\mathbf{g}$ has been located, the computer-implemented method establishes the step of determining a reintroduction manoeuvre from the change in position of the gap $\mathbf{g}$ in the descent to runway path. It is important to point out that, as is obvious, the series of aircrafts moving along the descent path is not stationary and, therefore, the located gap $\mathbf{g}$ will move to the extent that said aircrafts move. Therefore, to be able to reintroduce the aircraft $\mathbf{a}$, it is first necessary to calculate a future position $\mathbf{g}_e$ in the descent path to runway of the gap $\mathbf{g}$ after the passage of a certain time $t_g$. As can be seen in Figure 7, for calculating the future position $\mathbf{g}_e$ of the gap, the latter will be simulated as a phantom aircraft.

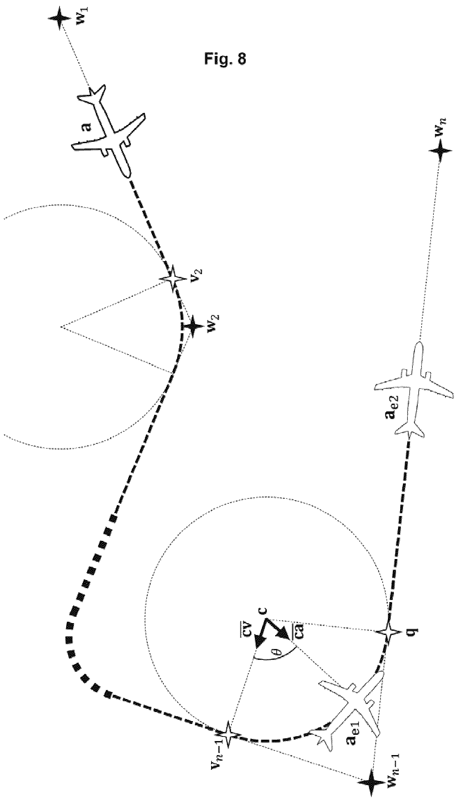

Based on the foregoing, i.e., the gap g being simulated or modelled as a phantom aircraft, in the scenario shown in Figure 8, a fragment of an approach sequence with a descent path to runway defined by $\mathbf{w}_1$,$\mathbf{w}_2$,...$\mathbf{w}_{n-1}$,$\mathbf{w}_n\}$ $\subset M$, such that it is verified that nextW($M$, $\mathbf{w}_i$) = $\mathbf{w}_{i+1}$, $1 \leq i < n$ and an aircraft $\mathbf{a} = [\mathbf{x}\ \mathbf{w}_2] \in \mathbb{A}$, is shown. The location

$\mathbf{a}_e \in \mathbb{A}$ of the aircraft **a** after a certain time $t \in$ T is to be estimated, assuming that it maintains the courses and speeds established in the approach sequence. Figure 8 also shows the passing points $\mathbf{v}_2 \dots \mathbf{v}_{n-1}$ where the aircrafts proceed to the change in waypoint.

Table 8 below shows the future aircraft position estimation algorithm. First, the estimated state is set to unknown (01), which indicates that the aircraft would have already touched down, and the current state is broken down into its reference waypoint and position components (02). Next, all the remaining waypoints of the sequence (03-10) are analysed. The established speed (04) and the turning point (05) are considered for the current waypoint, calling the function or algorithm x = turn(a) of Table 2. The time it takes the aircraft **a** to reach said point, as well as the start position of the rectilinear segment taken by the aircraft when tracing a Dubins curve (06) are calculated, for which purpose the algorithm of Table 3 is aggregated. If the time required for this movement exceeds the available time, then the future aircraft position (07) has been passed. Otherwise, said time is discounted and the forward movement towards the next waypoint of the sequence (08) is considered. At the outlet of the loop, if all the waypoints have been analysed it is because the aircraft **a** has landed; therefore, the algorithm ends (11). Otherwise, the aircraft **a** is located in the last segment before the future position $\mathbf{a}_e$. The future height can be calculated as an intermediate height between the target waypoint and the preceding waypoint, which will be proportional to the remaining time (12-14) if a progressive descent is assumed. Next, it must be determined whether the future position $\mathbf{a}_e$ is located in the curved segment or in the straight segment of the path to the turning point of the target waypoint. To that end, the time to travel along the initial curved segment (15) is calculated using the Dubins algorithm of Table 3 and compared with the remaining time (16). In the event that it is in the curved segment, the angle turned in the remaining time (19) and a unit vector perpendicular to the course in the turning point (20), which is later used to obtain the centre of the circumference (21), are calculated. Said vector is subsequently rotated according to the previous angle (22) and the position (23) and orientation (24) of the estimated state are obtained. If, conversely, the estimated state is located in the rectilinear segment, the time corresponding to the curved segment (26) is discounted from the remaining time, and there is added to the state of the aircraft at the time of abandoning said segment (27) a movement following the established course during the remaining time (28). The function ends by returning the estimated future state (30).

*Table 8. Future position estimation algorithm*

| | $\mathbf{a}_e = \text{EFP}(\mathbf{a},t)$ |
|---|---|
| 01 | $\mathbf{a}_e = \varnothing$ |
| 02 | $[\mathbf{x}\ \mathbf{w}] = \mathbf{a}$ |
| 03 | while **w** |
| 04 | $[\sim s] = \mathbf{w}$ |
| 05 | $\mathbf{v} = \text{turn}([\mathbf{x}\ \mathbf{w}])$ |
| 06 | $[\mathbf{q} \sim t_{\mathbf{v}}] = \mathcal{D}(\mathbf{x}, \mathbf{v}, s)$ |
| 07 | if $t \leq t_{\mathbf{v}}$ break |
| 08 | $t = t - t_{\mathbf{v}}$ |
| 09 | $[\mathbf{x}\ \mathbf{w}] = [\mathbf{v}\ \text{nextW}(M, \mathbf{w})]$ |
| 10 | endwhile |
| 11 | if $\mathbf{w} = \varnothing$ exit |
| 12 | $[\sim \sim z_{\text{p}} \sim] = \text{prevW}([\mathbf{x}\ \mathbf{w}])$ |
| | $[\sim \sim z_{\mathbf{w}} \sim] = \mathbf{w}$ |
| 14 | $z = z_{\text{p}} - \left(z_{\text{p}} - z_{\mathbf{w}}\right)\dfrac{t}{t_{\mathbf{v}}}$ |
| 15 | $t_{\mathbf{q}} = \mathcal{D}(\mathbf{x}, \mathbf{q}, s)$ |
| 16 | if $t < t_{\mathbf{q}}$ |
| 17 | $[\mathbf{p}\ \psi] = \mathbf{x}$ |
| 18 | $[\sim \psi_{\mathbf{q}}] = \mathbf{q}$ |

(continued)

| 19 | $\theta = \left|\psi - \psi_{\mathbf{q}}\right|\dfrac{t}{t_{\mathbf{q}}}$ |
|---|---|
| 20 | $\overline{\mathbf{cv}} = \left[\sin\left(\psi + \dfrac{\pi}{2}\right), \cos\left(\psi + \dfrac{\pi}{2}\right)\right]$ |
| 21 | $\mathbf{c} = \mathbf{p} - \overline{\mathbf{cv}}\, r$ |
| 22 | $\overline{\mathbf{ca}} = \overline{\mathbf{cv}} * \begin{bmatrix} \cos\theta & -\sin\theta \\ \sin\theta & \cos\theta \end{bmatrix}$ |
| 23 | $[x\ y] = \mathbf{c} + \overline{\mathbf{ca}}\, r$ |
| 24 | $\psi = \psi + \theta$ |
| 25 | else |
| 26 | $t = t - t_{\mathbf{q}}$ |
| 27 | $[\mathbf{p}\ \psi] = \mathbf{p}$ |
| 28 | $[x\ y] = \mathbf{p} + [\sin\ \psi, \cos\ \psi]st$ |
| 29 | endif |
| 30 | $\mathbf{a}_e = [x\ y\ z\ \psi\ \mathbf{w}]$ |

The fact that the functions EFP and TBA verify the following relationship $\mathbf{a}_L$ = EFP($\mathbf{a}_F$, $t$) $\Leftrightarrow$ $t$ = TBA($\mathbf{a}_L$, $\mathbf{a}_F$) stands out.

As stated, given that for calculating the future position $\mathbf{g}_e$ of the gap g, the latter is simulated as if it were an aircraft, the notation for obtaining the future position $\mathbf{a}_e$ of the aircraft a in a time t has been used in Table 8. The person skilled in the art will see that it is obvious to make the necessary changes in the notation for replacing $\mathbf{a}_e$ with $\mathbf{g}_e$, and t with $t_g$.

Having determined the future position $\mathbf{g}_e$ of the gap $\mathbf{g}$ according to the algorithm of Table 8, and as part of the reintroduction manoeuvre to be determined, as can be seen in Figure 7, it is necessary to calculate a reintroduction path for reintroducing the aircraft $\mathbf{a}$ in the descent path to runway such that said reintroduction path converges in the future position $\mathbf{g}_e$ in the descent to runway path of the gap $\mathbf{g}$.

Figure 7 shows a portion of an approach manoeuvre in which the descent path is defined by a series of waypoints, where at a given time the pilot of the aircraft $\mathbf{a}$ chooses to miss the landing. Therefore, the aircraft is to be reintroduced in the descent path using the gap g $\in$ A existing in the series of aircrafts and determined as has been explained up until now. The gap $\mathbf{g}$ acts like a phantom aircraft travelling along the series of waypoints defining the descent path, as described in detail above. Therefore, in order to proceed to the reinsertion of the aircraft $\mathbf{a}$, it is necessary to estimate how said gap $\mathbf{g}$ moves forward over time, i.e., it is necessary to obtain the future position $\mathbf{g_e} \in \mathbb{A}$ in the approach path, and at the same time generate a reintroduction path for the aircraft $\mathbf{a}$ which links with or converges in the future position $\mathbf{g}_e$. In this sense, a reintroduction path is modelled or simulated such that it converges at a point in the descent path which coincides with $\mathbf{g}_e$, i.e., it is compulsory to obtain point $\mathbf{g_e} \in \mathbb{A}$ in the descent path to runway which verifies that $\mathrm{TBA}(\mathbf{g}, \mathbf{g}_e) = \mathcal{D}(\mathbf{a}_1, \mathbf{g}_e, s_m)$, where $s_m$ is the speed established for the manoeuvre. In other words, the convergence point of the reintroduction path simulated according to the Dubins path must be located in the path between the gap g and the future position $\mathbf{g}_e$ thereof.

Table 9 below shows a preferred embodiment of the method for computing the reintroduction point. First, the time used for the manoeuvre is delimited. The lower limit is set the minimum time (01), whereas the upper limit is assigned to the required time it would take the determined gap $\mathbf{g}$ to reach the current position of the aircraft $\mathbf{a}$ to be reintroduced (02). If this time is greater than that used by the aircraft $\mathbf{a}$ to make a 360° turn (03), i.e., to turn around, to be able to be reintroduced in the descent path, then it would be impossible to execute the reintroduction in the gap g determined in the preceding step (04). Otherwise, the mean time of the interval (06) is obtained, where the future position $\mathbf{g}_e$ is obtained by calculating the evolution of the gap $\mathbf{g}$ after said time $tg$(07) by calling the future position estimation algorithm of Table 8, and the time consumed $t_a$ by the aircraft $\mathbf{a}$ to reach said position (08) which is obtained by calling the Dubins path algorithm of Table 3. If the aircraft $\mathbf{a}$ arrives late to the future position $\mathbf{g}_e$ of the gap g, the lower boundary of the interval (09) is moved. Conversely, if the aircraft $\mathbf{a}$ arrives soon, the upper boundary of the interval (10) is moved. This process is repeated until the interval is less than an allowable threshold (05-11). The adjustments of the lines (09) (10) are necessary due to the difference in the travel speed of the gap **g** in the descent path and the speed $s_m$ of the aircraft **a** for executing the reintroduction manoeuvre.

*Table 9. Method for obtaining the convergence point of the reintroduction path with the future position $g_e$ **of the gap g***

| | |
|---|---|
| | $g_e$ = ARPoint(**a**,**g**) |
| 01 | $t_{min} = 0$ |
| 02 | $t_{max}$ = TBA(**a**, **g**) |
| 03 | $t_{cycle} = 2\pi r / s_m$ |
| 04 | if $t_{max} < t_{cycle}$ error |
| 05 | while $(t_{max} - t_{min})$ > *threshold* |
| 06 | $t_{\mathbf{g}} = \dfrac{t_{min} + t_{max}}{2}$ |
| 07 | $g_e$ = EFP(**g**, $t_{\mathbf{g}}$) |
| 08 | $[\sim\sim t_a] = \mathcal{D}(\mathbf{a}, \mathbf{g}_e, s_m)$ |
| 09 | if $(t_{\mathbf{g}} < t_a)$ $t_{min} = t_{\mathbf{g}}$ |
| 10 | else $t_{max} = t_{\mathbf{g}}$ |
| 11 | endwhile |

Going back to Figure 7, given the aircraft $a \in \mathbb{A}$ performing a missed approach manoeuvre, and with the future position **g_e** of the gap g suitable for performing the reintroduction according to the algorithm of Table 9 being determined, it is necessary to generate a series of auxiliary waypoints transforming the reintroduction path modelled under the Dubins paths at valid waypoints which are integrated as part of the approach manoeuvre and can be followed by the aircraft **a,** such that said aircraft **a** traces the relevant reintroduction path and concludes with landing on the runway.

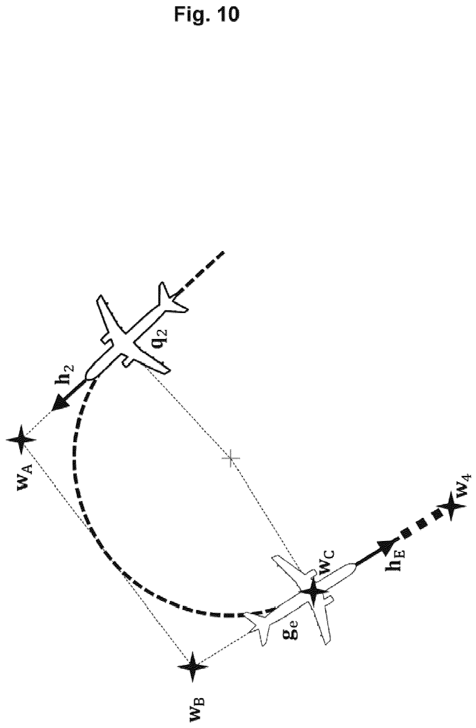

Figure 10 shows an enlarged detail of the portion of Figure 7 in which aircraft **a** is reintroduced in the descent path to runway. The future position **g_e** of the gap g as the reintroduction point $\mathbf{g}_e = [\mathbf{p}_e \; \psi_e \; \mathbf{w}_4] \in \mathbb{A},$ as well as the second passing point $\mathbf{q}_2 = [\mathbf{p}_2 \; \psi_2] \in \mathbb{X}$ of the Dubins curve can be observed.

The problem can be reduced to finding the series of auxiliary waypoints $\mathbf{w}_A$, $\mathbf{w}_B$ and $\mathbf{w}_C$, such that the ATC can update the flight plan of the aircraft **a** with a reintroduction manoeuvre which travels through the series of auxiliary waypoints $\{\mathbf{w}_A \; \mathbf{w}_B \; \mathbf{w}_C \; \mathbf{w}_4...\}$ and thus perform a new approach to runway manoeuvre.

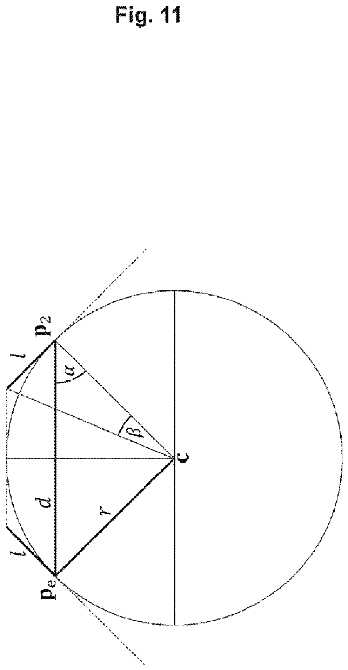

According to the piloting procedure described in Tables 1-2, the aircraft **a** will perform the desired curve if and only if segments $\overline{\mathbf{q}_2\mathbf{w}_A}$, $\overline{\mathbf{w}_A\mathbf{w}_B}$ and $\overline{\mathbf{w}_B\mathbf{w}_C}$ are tangent to a circumference inscribed in these segments. It must be noted that for curves less than 180°, it would be sufficient to define two segments; however, their length can be close to infinity for angles close to 180° and does not contemplate the convex angles. Therefore, the incorporation of three segments has been chosen in the present invention and, though not strictly necessary, the two angles formed between them are equal. Said circumstance is shown in Figure 11.

Table 10 below describes the algorithm for obtaining the series of auxiliary waypoints defining the reintroduction path. It can be seen in this Table 10 that the algorithms of Tables 1 to 9 converge and, therefore, everything described up until now has been carried out for the purpose of supplying new waypoints to the aircraft that it can include as part of their approach manoeuvre and which allow it to conclude with landing on the runway, after having previously missed the landing.

Firstly, the gap **g** (01) is obtained according to the algorithm of Table 6 and the future position $g_e$ of the gap **g** in which there converges the reintroduction path modelled with the Dubins paths (02) according to the algorithm of Table 9, which is broken down in its components (03), which is used to construct a unit vector in the direction of the course (04). Moreover, the passing point of the Dubins curve (05) is obtained, broken down into its components (06), and used to construct a unit vector in the direction of the course (07). The distance between both points (08) is subsequently obtained and when it is related to the radius of curvature, angle $\alpha$(09) and then angle $\beta$(10) can be determined. From this, the distance (11) at which the two first intermediate waypoints (12-13) are located can be calculated. The third waypoint coincides with the future position $g_e$ (14). The complete sequence to the approach procedure (15-20) is incorporated. Lastly, the new reference waypoint (21-22) is indicated to the aircraft **a**.

*Table 10. Method for computing the auxiliary waypoints for executing the reintroduction manoeuvre*

| | [$M'$ **a**] = ARWaypoints($M$, **a**) |
|---|---|
| 01 | **g** = gap(**a**, $T_1$, $T$, firstW($M$)) |
| 02 | $g_e$ = ARPoint(**a**,**g**) |
| 03 | [$p_e$ $\psi_e$ $w_e$] = $g_e$ |
| 04 | $[\sim q_2 \sim] = \mathcal{D}(a, g_e, s_m)$ |
| 05 | $h_e$ = [sin $\psi_e$, cos $\psi_e$] |
| 06 | [$p_2$ $\psi_2$] = $q_2$ |
| 07 | $h_2$ = [sin $\psi_2$, cos $\psi_2$] |
| 08 | $d$ = \|$p_e$ - $p_2$\| |
| 09 | $\alpha = \mathrm{acos}\dfrac{d}{2r}$ |
| 10 | $\beta = \dfrac{90° - \alpha}{2}$ |
| 11 | $l = r \tan \beta$ |
| 12 | $w_A$ = [$p_2$ + $l h_2$ $s_m$] |
| | $w_B$ = [$p_e$ - $l h_e$ $s_m$] |
| 14 | $w_C$ = [$p_e$ $s_m$] |
| 15 | $M'$ = $M \cup \{w_A, w_B, w_C\}$ |
| 16 | firstW(M') = firstW(M) |
| 17 | $\forall w \in M$, nextW($M'$, **w**) = nextW($M$, **w**) |
| 18 | nextW($M'$, $w_A$) = $w_B$ |
| 19 | nextW($M'$, $w_B$) = $w_C$ |
| 20 | nextW($M'$, $w_C$) = $w_e$ |
| 21 | [x $\sim$] = **a** |
| 22 | **a**' = [x $w_A$] |

Having determined the series of auxiliary waypoints $w_A$, $w_B$ and $w_C$, they are transmitted to the aircraft **a** for it to incorporate them as part of the approach procedure and can finally conclude the manoeuvre with landing on the runway.

The person skilled in the art will be able to see in Table 10, where the series of auxiliary waypoints $w_A$, $w_B$ and $w_C$ taking the aircraft **a** towards the descent path after missing the landing is calculated, that all the algorithms developed in the invention are used.

It is important to point out that even though there are other parameterised paths of straight lines that link with curves of constant radius that could be used for modelling or simulating the descent to runway path and/or the reintroduction path for the aircraft **a** and that their use would be within the scope of the invention, the paths with the Dubins curves are used in the preferred embodiment because of their simple implementation.

Moreover, the invention discloses an embodiment in which there is incorporated a device provided with at least one central processing unit configured for calculating a reintroduction manoeuvre for reintroducing an aircraft **a** in a descent to runway path following a series of aircrafts with a minimum time interval of separation between said aircrafts determining the existence of a gap **g** in the descent path to runway for reintroducing the aircraft **a** and determining a reintroduction manoeuvre from the change in position of the gap **g** in the descent path to runway.

In addition to the central processing unit, this device comprises a storage unit configured for storing the instructions or the algorithms reflected in Tables 1 to 10, such that by accessing these instructions or algorithms, the central processing unit is capable of executing the corresponding actions for determining the gap **g** in the descent path and the corresponding reintroduction manoeuvre links the aircraft **a** to be reintroduced with a future position $g_e$ of the gap **g**.

This device is provided for being installed in an air traffic control tower, such that the air traffic controller ATC can obtain in an automated manner the waypoints of the reintroduction path for reintroducing the aircraft **a** that missed the landing, or it can be installed in the aircrafts, such that if the pilot of an aircraft has to miss the landing, he can, provided that there is two-way communication with the other aircrafts of the series that are performing the approach manoeuvre and with the ATC, obtain the reintroduction path immediately and incorporate it in his approach manoeuvre to conclude the landing.

Likewise, the device can be provided in a remote location, for example, in a server, such that it can receive the position data of the aircrafts and, in the event that an aircraft **a** decides to abort the landing, calculate and send the data of the reintroduction manoeuvre either to the ATC or to the aircraft **a,** so that it can conclude the approach manoeuvre and land on the runway.

Moreover, the invention also includes control systems for the approach to runway of aircrafts comprising at least one central processing unit configured for detecting and communicating in a two-way manner with a series of aircrafts entering an airspace close to the runway, wherein these systems are configured for monitoring an event that requires a missed approach manoeuvre, i.e., where one of the aircrafts, the aircraft **a,** that is part of the system misses or aborts the landing and, in response to the detection of this event, the system, which is provided with a central processing unit, transmits to it instructions suitable for executing a reintroduction manoeuvre determining the existence of a gap g in the descent path to runway for reintroducing the aircraft **a,** and determining a reintroduction manoeuvre from the change in position of the gap g in the descent path to runway, according to the algorithms disclosed in Tables 1 to 10.

In another embodiment, the invention discloses a method relating to the steps an aircraft **a** must follow for, in the event of missing the landing, being reintroduced in the descent path to runway followed by a series of aircrafts for landing on the runway separated from one another by a minimum interval, where either the pilot and/or the automatic pilot of the aircraft must monitor an event that requires the execution of a missed approach procedure while the aircraft **a** moves along the descent path to runway and, in response to the detection of the event, direct the aircraft **a** out of the descent path to runway, to receive instructions for performing a determined reintroduction manoeuvre according to the computer-implemented method as described in Tables 1 to 10. In particular, in this method the instructions received by the pilot and/or the automatic pilot of the aircraft are the auxiliary waypoints obtained according to the algorithm of Table 10 in which the algorithms of Tables 1 to 9 converge, as mentioned above.

Likewise, the invention contemplates the implementation of a control system for the approach to runway of an aircraft **a** in a series of aircrafts located in an airspace close to the runway, the control system comprises at least a central processing unit configured for receiving a descent path to runway to be followed by the aircrafts, receiving a position of the aircrafts in the descent to runway path; and monitoring an event that requires the execution of a missed approach procedure of the aircraft **a,** where, in response to the detection of the event, the central processing unit is configured for receiving and interpreting the instructions suitable for performing a determined reintroduction manoeuvre according to the computer-implemented method as described in Tables 1 to 10. In particular, in this method the instructions received by the central processing unit contain the auxiliary waypoints obtained according to the algorithm of Table 10 in which the algorithms of Tables 1 to 9 converge, as mentioned above.

The control system must furthermore be provided with suitable transmission means prepared for transmitting and/or receiving the position of the aircraft and of the other aircrafts, as well as for receiving the instructions for the reintroduction manoeuvre, said communication means being connected with the central processing unit such that said unit receives the instructions and interprets them, entering the auxiliary waypoints defining the reintroduction path as part of the approach manoeuvre of the aircraft **a** so that it can conclude with landing on the runway that it initially aborted.

Lastly, the invention contemplates the physical medium in which the computer-implemented method can be stored and/or installed for calculating a reintroduction manoeuvre for reintroducing an aircraft in a descent path to runway, said physical medium being a non-transitory computer-readable medium or the like which, installed in the latter, executes instructions which, when processed by a central processing unit, make said central processing unit implement the computer-implemented method for calculating a reintroduction manoeuvre for reintroducing an aircraft in a descent path to runway in devices and/or systems provided for such purpose.

The non-transitory readable medium can be a hard drive, a USB storage unit, one or more CDs, the internal memory of a portable computing device, the storage unit of a server or of a fixed computing device, and even a server in the cloud. For the scope of the invention, the non-transitory readable medium is any medium that allows storing the instructions in the form of an algorithm of the present invention and allows a central processing unit to access same in order to execute them.

Possible embodiments of the computer-implemented method for calculating a reintroduction manoeuvre for reintroducing an aircraft in a descent to runway path are listed below:

1. A computer-implemented method for calculating a reintroduction manoeuvre for reintroducing an aircraft **a** in a descent path to runway following a series of aircrafts with a minimum time interval of separation between said aircrafts, the method comprising the steps of:

- determining the existence of a gap **g** in the descent to runway path for reintroducing the aircraft **a;** and

- determining a reintroduction manoeuvre from the change in position of the gap g in the descent path to runway.

2. The computer-implemented method according to embodiment 1, wherein the step of determining the existence of a gap **g** in the descent path to runway for reintroducing the aircraft **a** comprises the sub-steps of:

- determining the amount and the order of the aircrafts existing in the series of aircrafts;
- assigning a pair of consecutive aircrafts of the series as leader aircraft $a_L$ and follower aircraft $a_F$; and
- calculating the existence of the gap g for reintroducing the aircraft **a** between the leader aircraft $a_L$ and the follower aircraft $a_F$.

3. The computer-implemented method according to embodiment 2, wherein the sub-step of calculating the existence of the gap g for reintroducing the aircraft **a** between the leader aircraft $a_L$ and the follower aircraft $a_F$ comprises the sub-steps of:

- calculating a time $t_L$ for reinserting the aircraft **a** behind leader aircraft $a_L$; and
- calculating a time $t_F$ for reinserting the aircraft **a** ahead of follower aircraft $a_F$;
  where
  if $t_F$ is greater than a pre-established minimum time $T_1$ for reintroducing the aircraft **a** in the descent path and if $t_F$ is greater than $t_L$, calculating the gap **g** depending on a future position of the follower aircraft $a_F$ in the descent path in a reinsertion time $t_R$.

4. The computer-implemented method according to any of the preceding embodiments, wherein the step of determining a reintroduction manoeuvre from the evolution of the position of the gap **g** in the descent path to runway comprises the sub-steps of:

- calculating a future position $g_e$ in the descent path to runway of the gap **g** after the passage of a certain time $t_g$; and
- calculating a reintroduction path for reintroducing the aircraft **a** in the descent path to runway;
  where said reintroduction path converges in the future position $g_e$ in the descent path to runway of the gap **g.**

5. The computer-implemented method according to the preceding embodiment further comprising the sub-step of:

- calculating a time consumed $t_a$ by the aircraft **a** when following said reintroduction path until converging in the descent path to runway at a manoeuvre speed $s_m$;
  where
  if the difference between $t_g$ and $t_a$ is less than a pre-established allowable threshold time, the reintroduction point corresponds to the future position $g_e$ of the gap **g** over time $t_g$.

6. The computer-implemented method according to any of embodiments 4 or 5 further comprising a sub-step of generating a series of auxiliary waypoints configuring the reintroduction path for reintroducing the aircraft **a** in the descent path to runway.
Possible embodiments of the device for calculating a reintroduction manoeuvre for reintroducing an aircraft in a descent path to runway are listed below:
7. A device for calculating a reintroduction manoeuvre for reintroducing an aircraft **a** in a descent path to runway following a series of aircrafts with a minimum time interval of separation between said aircrafts, wherein the device comprises at least one central processing unit configured for:

- determining the existence of a gap g in the descent path to runway for reintroducing the aircraft **a;** and
- determining a reintroduction manoeuvre from the change in position of the gap **g** in the descent path to runway.

8. The device according to the preceding embodiment, wherein for determining the existence of a gap **g** in the descent path to runway for reintroducing the aircraft **a,** the central processing unit is additionally configured for:

- determining the amount and the order of the aircrafts existing in the series of aircrafts;
- assigning a pair of consecutive aircrafts of the series as leader aircraft $a_L$ and follower aircraft $a_F$; and
- calculating the existence of the gap g for reintroducing the aircraft **a** between the leader aircraft $a_L$ and the follower aircraft $a_F$.

9. The device according to the preceding embodiment, wherein for calculating the existence of the gap g for reintroducing the aircraft **a** between the leader aircraft $\mathbf{a_L}$ and the follower aircraft $\mathbf{a_F}$, the central processing unit is additionally configured for:

- calculating a time $t_L$ for reinserting the aircraft **a** behind leader aircraft $\mathbf{a_L}$; and
- calculating a time $t_F$ for reinserting the aircraft **a** ahead of follower aircraft $\mathbf{a_F}$;
  where
  if $t_F$ is greater than a pre-established minimum time $T_1$ for reintroducing the aircraft **a** in the descent path and if $t_F$ is greater than $t_L$, calculating the gap **g** depending on a future position of the follower aircraft $\mathbf{a_F}$ in the descent path in a reinsertion time $t_R$.

10. The device according to any of embodiments 7 to 9, wherein for determining a reintroduction manoeuvre from the evolution of the position of the gap **g** in the descent path to runway, the central processing unit is configured for:

- calculating a future position $g_e$ in the descent path to runway of the gap **g** after the passage of a certain time $t_g$; and
- calculating a reintroduction path for reintroducing the aircraft **a** in the descent path to runway;
  where said reintroduction path converges in the future position $g_e$ in the descent path to runway of the gap **g.**

11. The device according to the preceding embodiment, wherein the central processing unit is additionally configured for:

- calculating a time consumed $t_a$ by the aircraft **a** when following said reintroduction path until converging in the descent path to runway at a manoeuvre speed $s_m$;
  where
  if the difference between $t_g$ and $t_a$ is less than a pre-established allowable threshold time, the point of reintroduction corresponds to the future position $g_e$ of the gap g over time $t_g$.

12. The device according to any of embodiments 10 or 11, wherein the central processing unit is further configured for generating a series of auxiliary waypoints configuring the reintroduction path for reintroducing the aircraft **a** in the descent path to runway.

Possible embodiments of the control system for the approach to runway of aircrafts are listed below:

13. A control system for the approach to runway of aircrafts comprising at least one central processing unit configured for detecting and communicating in a two-way manner with a series of aircrafts entering an airspace close to the runway, wherein in the control system the central processing unit is configured for:

- monitoring and receiving the position of the aircrafts;
- providing a descent path to runway to the series of aircrafts; and
- receiving an event that requires the execution of a missed approach procedure;
  in response to the reception of the event:

  - determining the existence of a gap **g** in the descent path to runway for reintroducing the aircraft **a;**
  - determining a reintroduction manoeuvre from the change in position of the gap **g** in the descent path to runway;
  - transmitting to the aircraft **a** the determined reintroduction manoeuvre.

14. The control system according to the preceding embodiment, wherein in the response to the reception of the event for determining the existence of a gap g in the descent path to runway for reintroducing the aircraft **a,** the central processing unit is configured for:

- determining the amount and the order of the aircrafts existing in the series of aircrafts;
- assigning a pair of consecutive aircrafts of the series as leader aircraft $\mathbf{a_L}$ and follower aircraft $\mathbf{a_F}$; and
- calculating the existence of the gap **g** for reintroducing the aircraft **a** between the leader aircraft $\mathbf{a_L}$ **and** the follower aircraft $\mathbf{a_F}$.

15. The control system according to the preceding embodiment, wherein for calculating the existence of the gap **g** for reintroducing the aircraft **a** between the leader aircraft $\mathbf{a_L}$ and the following aircraft $\mathbf{a_F}$, the central processing unit is additionally configured for:

- calculating a time $t_L$ for reinserting the aircraft **a** behind leader $\mathbf{a_L}$; and

- calculating a time $t_F$ for reinserting the aircraft **a** ahead of follower aircraft $a_F$;
  where
  if $t_F$ is greater than a pre-established minimum time $T_1$ for reintroducing the aircraft **a** in the descent path and if $t_F$ is greater than $t_L$, calculating the gap **g** depending on a future position of the follower aircraft $a_F$ in the descent path in a reinsertion time $t_R$.

16. The control system according to any of embodiments 13 to 15, wherein the response to the reception of the event for determining a reintroduction manoeuvre from the change in position of the gap **g** in the descent path to runway, the central processing unit is configured for:

- calculating a future position $g_e$ in the descent path to runway of the gap **g** after the passage of a certain time $t_g$; and
- calculating a reintroduction path for reintroducing the aircraft **a** in the descent path to runway;
  where said reintroduction path converges in the future position $g_e$ in the descent path to runway of the gap **g.**

17. The control system according to the preceding embodiment, wherein the central processing unit is additionally configured for:

- calculating a time consumed $t_a$ by the aircraft **a** when following said reintroduction path until converging in the descent path to runway at a manoeuvre speed $s_m$;
  where
  if the difference between $t_g$ and $t_a$ is less than a pre-established allowable threshold time, the point of reintroduction corresponds to the future position $g_e$ of the gap **g** over time $t_g$.

18. The control system according to any of embodiments 16 or 17, wherein the central processing unit is further configured for generating a series of auxiliary waypoints configuring the reintroduction path for reintroducing the aircraft **a** in the descent path to runway.
Possible embodiments of the reintroduction method for reintroducing an aircraft **a** in a descent path to runway are listed below:
19. A reintroduction method for reintroducing an aircraft **a** in a descent path to runway followed by a series of aircrafts for landing on the runway with a minimum interval of separation between said aircrafts, the method comprises the steps of:

- monitoring an event that requires the execution of a missed approach procedure while the aircraft **a** moves along the descent path to runway;
- in response to the detection of the event, directing the aircraft **a** out of the descent path; and
- receiving instructions for performing a determined reintroduction manoeuvre according to the computer-implemented method of claims 1 to 6.

20. A control system for the approach to runway of an aircraft **a** in a series of aircrafts located in an airspace close to the runway, the system comprises a central processing unit configured for:

- receiving a descent path to runway to be followed by the aircrafts;
- receiving a position of the aircrafts in the descent path to runway; and
- monitoring an event that requires the execution of a missed approach procedure of the aircraft **a;**
  in response to the detection of the event:
- receiving instructions for performing a determined reintroduction manoeuvre according to the computer-implemented method of embodiments 1 to 6.

21. A non-transitory computer-readable medium installed in a device for calculating a reintroduction manoeuvre for reintroducing an aircraft according to any of embodiments 7 to 12 and/or a control system for the approach to runway of aircrafts according to any of embodiments 13 to 18, said medium being characterised in that it stores instructions which, when processed by the central processing unit provided in such devices or systems, make said central processing unit implement the computer-implemented method for calculating a reintroduction manoeuvre for reintroducing an aircraft in a descent to runway path, in the event of a missed approach manoeuvre, described according to any of embodiments 1 to 6.

**Claims**

1.  A computer-implemented method for calculating a reintroduction manoeuvre for reintroducing an aircraft **a** in a descent path to runway following a series of aircrafts with a minimum time interval of separation between said aircrafts, the method being **characterised in that** it comprises the steps of:

    - determining the existence of a gap **g** in the descent path to runway for reintroducing the aircraft **a;** and
    - determining a reintroduction manoeuvre from the change in position of the gap g in the descent path to runway.

2.  The computer-implemented method according to claim 1, wherein the step of determining the existence of a gap **g** in the descent path to runway for reintroducing the aircraft **a** comprises the sub-steps of:

    - determining the amount and the order of the aircrafts existing in the series of aircrafts;
    - assigning a pair of consecutive aircrafts of the series as leader aircraft $a_L$ and follower aircraft $a_F$; and
    - calculating the existence of the gap **g** for reintroducing the aircraft **a** between the leader aircraft $a_L$ and the follower aircraft $a_F$.

3.  The computer-implemented method according to claim 2, wherein the sub-step of calculating the existence of the gap **g** for reintroducing the aircraft **a** between the leader aircraft $a_L$ and the follower aircraft $a_F$ comprises the sub-steps of:

    - calculating a time $t_L$ for reinserting the aircraft **a** behind leader aircraft $a_L$; and
    - calculating a time $t_F$ for reinserting the aircraft **a** ahead of follower aircraft $a_F$;
    where
    if $t_F$ is greater than a pre-established minimum time $T_1$ for reintroducing the aircraft **a** in the descent path and if $t_F$ is greater than $t_L$, calculating the gap **g** depending on a future position of the follower aircraft $a_F$ in the descent path in a reinsertion time $t_R$.

4.  The computer-implemented method according to any of the preceding claims, wherein the step of determining a reintroduction manoeuvre from the evolution of the position of the gap g in the descent path to runway comprises the sub-steps of:

    - calculating a future position $g_e$ in the descent path to runway of the gap g after the passage of a certain time $t_g$; and
    - calculating a reintroduction path for reintroducing the aircraft **a** in the descent path to runway;
    where said reintroduction path converges in the future position $g_e$ in the descent path to runway of the gap **g.**

5.  The computer-implemented method according to the preceding claim further comprising a sub-step of generating a series of auxiliary waypoints configuring the reintroduction path for reintroducing the aircraft **a** in the descent path to runway.

6.  A device for calculating a reintroduction manoeuvre for reintroducing an aircraft **a** in a descent path to runway following a series of aircrafts with a minimum time interval of separation between said aircrafts, the device being **characterised in that** it comprises at least one central processing unit configured for:

    - determining the existence of a gap **g** in the descent path to runway for reintroducing the aircraft **a;** and
    - determining a reintroduction manoeuvre from the change in position of the gap **g** in the descent path to runway.

7.  The device according to the preceding claim, wherein for determining the existence of a gap **g** in the descent path to runway for reintroducing the aircraft **a,** the central processing unit is additionally configured for:

    - determining the amount and the order of the aircrafts existing in the series of aircrafts;
    - assigning a pair of consecutive aircrafts of the series as leader aircraft $a_L$ and follower aircraft $a_F$; and
    - calculating the existence of the gap **g** for reintroducing the aircraft **a** between the leader aircraft $a_L$ and the follower aircraft $a_F$.

8.  The device according to the preceding claim, wherein for calculating the existence of the gap **g** for reintroducing the aircraft **a** between the leader aircraft $a_L$ and the follower aircraft $a_F$, the central processing unit is additionally configured for:

- calculating a time $t_L$ for reinserting the aircraft **a** behind leader aircraft $\mathbf{a_L}$; and
- calculating a time $t_F$ for reinserting the aircraft **a** ahead of follower aircraft $a_F$;
where
if $t_F$ is greater than a pre-established minimum time $T_1$ for reintroducing the aircraft **a** in the descent path and if $t_F$ is greater than $t_L$, calculating the gap **g** depending on a future position of the follower aircraft $a_F$ in the descent path in a reinsertion time $t_R$.

9. The device according to any of claims 6 to 8, wherein for determining a reintroduction manoeuvre from the evolution of the position of the gap **g** in the descent to runway path, the central processing unit is configured for:

- calculating a future position $g_e$ in the descent path to runway of the gap **g** after the passage of a certain time $t_g$; and
- calculating a reintroduction path for reintroducing the aircraft **a** in the descent path to runway;
where said reintroduction path converges in the future position $g_e$ in the descent path to runway of the gap **g.**

10. The device according to preceding claim, wherein the central processing unit is further configured for generating a series of auxiliary waypoints configuring the reintroduction path for reintroducing the aircraft **a** in the descent path to runway.

11. A control system for approaching to runway of aircrafts comprising at least one central processing unit configured for detecting and communicating in a two-way manner with a series of aircrafts entering an airspace close to the runway, the system being **characterised in that** the central processing unit is configured for:

- monitoring and receiving the position of the aircrafts;
- providing a descent path to runway to the series of aircrafts; and
- receiving an event that requires the execution of a missed approach procedure;
in response to the reception of the event:

- determining the existence of a gap **g** in the descent path to runway for reintroducing the aircraft **a;**
- determining a reintroduction manoeuvre from the change in position of the gap g in the descent path to runway;
- transmitting to the aircraft **a** the determined reintroduction manoeuvre.

12. The control system according to the preceding claim, wherein in the response to the reception of the event for determining the existence of a gap g in the descent path to runway for reintroducing the aircraft **a,** the central processing unit is configured for:

- determining the amount and the order of the aircrafts existing in the series of aircrafts;
- assigning a pair of consecutive aircrafts of the series as leader aircraft $\mathbf{a_L}$ and follower aircraft $\mathbf{a_F}$; and
- calculating the existence of the gap **g** for reintroducing the aircraft **a** between the leader aircraft $a_L$ and the follower aircraft $\mathbf{a_F}$.

13. The control system according to the preceding claim, wherein for calculating the existence of the gap **g** for reintroducing the aircraft **a** between the leader aircraft $\mathbf{a_L}$ and the follower aircraft $\mathbf{a_F}$, the central processing unit is additionally configured for:

- calculating a time $t_L$ for reinserting the aircraft **a** behind leader aircraft $\mathbf{a_L}$; and
- calculating a time $t_F$ for reinserting the aircraft **a** ahead of follower aircraft $\mathbf{a_F}$;
where
if $t_F$ is greater than a pre-established minimum time $T_1$ for reintroducing the aircraft **a** in the descent path and if $\mathbf{t_F}$ is greater than $t_L$, calculating the gap **g** depending on a future position of the follower aircraft $a_F$ in the descent path in a reinsertion time $t_R$.

14. The control system according to any of claims 11 to 13, wherein in the response to the reception of the event for determining a reintroduction manoeuvre from the change in position of the gap g in the descent path to runway, the central processing unit is configured for:

- calculating a future position $g_e$ in the descent path to runway of the gap g after the passage of a certain time $t_g$; and

- calculating a reintroduction path for reintroducing the aircraft **a** in the descent path to runway;
where said reintroduction path converges in the future position $g_e$ in the descent path to runway of the gap **g.**

**15.** The control system according to the preceding claim, wherein the central processing unit is further configured for generating a series of auxiliary waypoints configuring the reintroduction path for reintroducing the aircraft **a** in the descent path to runway.

**16.** A reintroduction method for reintroducing an aircraft **a** in a descent path to runway followed by a series of aircrafts for landing on the runway with a minimum interval of separation between said aircrafts, the method being **characterised in that** it comprises the steps of:

- monitoring an event that requires the execution of a missed approach procedure while the aircraft **a** is moving along the descent path to runway;
- in response to the detection of the event, directing the aircraft **a** out of the descent path; and
- receiving instructions for performing a determined reintroduction manoeuvre according to the computer-implemented method of claims 1 to 5.

**17.** A control system for approaching to runway of an aircraft **a** in a series of aircrafts located in an airspace close to the runway, the system being **characterised in that** it comprises a central processing unit configured for:

- receiving a descent path to runway to be followed by the aircrafts;
- receiving a position of the aircrafts in the descent path to runway; and
- monitoring an event that requires the execution of a missed approach procedure of the aircraft **a;**
in response to the detection of the event:
- receiving instructions for performing a determined reintroduction manoeuvre according to the computer-implemented method of claims 1 to 5.

**18.** A non-transitory computer-readable medium installed in a device for calculating a reintroduction manoeuvre for reintroducing an aircraft according to any of claims 6 to 10 and/or a control system for approaching to runway of aircrafts according to any of claims 11 to 15, said medium being **characterised in that** it stores instructions which, when processed by the central processing unit provided in such devices or systems, make said central processing unit implement the computer-implemented method for calculating a reintroduction manoeuvre for reintroducing an aircraft in a descent path to runway in the event of a missed approach manoeuvre described according to any of claims 1 to 5.

**Fig. 1**

## Fig. 2

# Fig. 3

## Fig. 4

**Fig. 5**

Fig. 6

**Fig. 7**

Fig. 8

EP 3 866 137 A1

Fig. 9

## Fig. 10

**Fig. 11**

Europäisches
Patentamt

European
Patent Office

Office européen
des brevets

# EUROPEAN SEARCH REPORT

Application Number

EP 20 38 2099

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TODD J CALLANTINE ET AL: "Investigating the impact of off-nominal events on high-density green arrivals", DIGITAL AVIONICS SYSTEMS CONFERENCE (DASC), 2011 IEEE/AIAA 30TH, IEEE, 16 October 2011 (2011-10-16), pages 2D5-1, XP032069335, DOI: 10.1109/DASC.2011.6096001 ISBN: 978-1-61284-797-9 * pages 2D5-1 * * pages 2D5-3 - pages 2D5-6 * * pages 2D5-14 * | 1-18 | INV. G08G5/00 G08G5/02 |
| X | "Point Merge Integration of Arrival Flows Enabling Extensive RNAV Application and Continuous Descent - Operational Services and Environment Definition", , 19 July 2010 (2010-07-19), pages 1-124, XP055109978, Brétigny-sur-Orge (FR) Retrieved from the Internet: URL:https://www.eurocontrol.int/sites/defa ult/files/content/documents/sesar/point-me rge-osed-v2.0-2010.pdf [retrieved on 2014-03-26] * paragraph [7.4.2] * * figures 7-2,7-3,7-4 * | 1-18 | TECHNICAL FIELDS SEARCHED (IPC) G08G G01C |
| A | CA 2 635 182 A1 (BOEING CO [US]) 26 January 2009 (2009-01-26) * claims 1-13 * * figures 1-7 * | 1-18 | |

The present search report has been drawn up for all claims

| Place of search | Date of completion of the search | Examiner |
|---|---|---|
| The Hague | 29 July 2020 | van der Pol, Edwin |

EPO FORM 1503 03.82 (P04C01)

## ANNEX TO THE EUROPEAN SEARCH REPORT
## ON EUROPEAN PATENT APPLICATION NO.

EP 20 38 2099

This annex lists the patent family members relating to the patent documents cited in the above-mentioned European search report.
The members are as contained in the European Patent Office EDP file on
The European Patent Office is in no way liable for these particulars which are merely given for the purpose of information.

29-07-2020

| Patent document cited in search report | | Publication date | Patent family member(s) | Publication date |
|---|---|---|---|---|
| CA 2635182 | A1 | 26-01-2009 | AT 532164 T<br>CA 2635182 A1<br>EP 2023310 A2<br>US 2009030564 A1 | 15-11-2011<br>26-01-2009<br>11-02-2009<br>29-01-2009 |

EPO FORM P0459

For more details about this annex : see Official Journal of the European Patent Office, No. 12/82